# EUROPEAN PATENT APPLICATION

(11) **EP 4 769 985 A1**
(43) Date of publication of application: **01.07.2026**
(21) Application number: 24864396.7
(22) Date of filing: 19.08.2024
(51) Int. Cl.: H04L 1/00

(54) **COMMUNICATION METHOD AND APPARATUS**

(30) Priority: 13.09.2023 CN 202311184906
(71) Applicant: HUAWEI TECHNOLOGIES CO., LTD., Shenzhen, Guangdong 518129 (CN)
(72) Inventor: SUN, Fei, Shenzhen, Guangdong 518129 (CN)
(74) Representative: Maiwald GmbH
(86) International application number: PCT/CN2024/113124
(87) International publication number: WO 2025/055673

(57) **Abstract**

This application provides a communication method and apparatus, and may be used in the communication field. The method includes: When a first donor node receives first information for requesting to provide a first service function for a terminal device, the first donor node may send first configuration information to a first IAB DU based on the first information, and send second configuration information to a second IAB DU included in an access IAB node of the terminal device, where the first IAB node includes the first IAB DU and a first IAB MT, and the first IAB MT has the first service function. The first donor node may further separately send RRC reconfiguration information to the first IAB MT and the terminal device to align PDCP configuration information and/or SDAP configuration information on a terminal device side and a first IAB MT side, so that the terminal device can communicate with the first IAB MT having the first service function, and the first IAB MT can provide the first service function for the terminal device.

## Description

This application claims priority to Chinese Patent Application No. 202311184906.9, filed with the China National Intellectual Property Administration on September 13, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In an integrated access and backhaul (integrated access and backhaul, IAB) network, an IAB node (IAB node) may provide a wireless access service for a terminal device, and service data of the terminal device may be transmitted by connecting the IAB node to an IAB donor (IAB donor) by using a wireless backhaul link. The IAB donor may also be referred to as a donor node (donor node) or a donor gNodeB (donor gNodeB, DgNB). The IAB node includes a mobile termination (mobile termination, MT) and a distributed unit (distributed unit, DU). The IAB node may be connected to a core network by using the IAB donor. For example, the IAB donor may be connected to a core network element serving the terminal device, and provide a wireless backhaul function for the IAB node.

A service-based architecture (service-based architecture, SBA) is an important feature of a fifth generation (5^{th} generation, 5G) core network architecture. A network function is divided into reusable service function modules, and different service function modules communicate with each other through a unified lightweight interface. For evolution of a sixth generation (6^{th} generation, 6G) network architecture, most equipment vendors and operators propose a radio access network (radio access network, RAN) service-based requirement, and introduce the idea of service-based architecture on a core network side into a next-generation RAN architecture design, to implement fast rollout and flexible deployment of a new service function on a RAN side, and simplify a network. However, currently, RAN functions are highly coupled, algorithms between the RAN functions are highly integrated, and uncertainty exists in the integration. Therefore, it is difficult to integrate a service function module on the RAN side.

### SUMMARY

This application provides a communication method and apparatus to integrate a service function on an IAB MT side, so that the IAB MT having the service function can provide the service function for a terminal device.

According to a first aspect, a communication method is provided. The method may be performed by a first donor node, or a chip or a chip system in a first donor node. The method includes: The first donor node receives first information, where the first information is used to request to provide a first service function for a terminal device; the first donor node sends first configuration information to a first integrated access and backhaul IAB distributed unit DU based on the first information, where the first configuration information indicates a correspondence between a first data radio bearer DRB identifier and a first backhaul adaptation protocol BAP routing identifier, a first IAB node includes the first IAB DU and a first IAB mobile termination MT, and the first IAB MT has the first service function; the first donor node sends second configuration information to a second IAB DU based on the first information, where the second configuration information indicates a correspondence between a second DRB identifier and a second BAP routing identifier, a second IAB node includes the second IAB DU, and the second IAB node is an access IAB node of the terminal device; and the first donor node separately sends first RRC reconfiguration information to the first IAB MT and the terminal device based on the first information, where the first RRC reconfiguration information indicates PDCP configuration information and/or SDAP configuration information.

Based on the foregoing technical solution, a service function is integrated on an IAB MT side. When the first donor node receives the first information for requesting to provide the first service function for the terminal device, the first donor node may send the first configuration information to the first IAB DU based on the first information, and send the second configuration information to the second IAB DU included in the access IAB node of the terminal device, where the first IAB node includes the first IAB DU and the first IAB MT, and the first IAB MT has the first service function. The first donor node may further separately send RRC reconfiguration information to the first IAB MT and the terminal device based on the first information to align PDCP configuration information and/or SDAP configuration information on a terminal device side and a first IAB MT side, so that the terminal device can communicate with the first IAB MT having the first service function, and the first IAB MT can provide the first service function for the terminal device.

With reference to the first aspect, in some implementations of the first aspect, the method further includes: The first donor node determines, based on the first information, a first data transmission path between the terminal device and the first IAB MT and first quality of service requirement information corresponding to the first service function in a topology of the first donor node; and the first donor node determines the first configuration information and the second configuration information based on the first data transmission path and the first quality of service requirement information.

With reference to the first aspect, in some implementations of the first aspect, the method further includes: The first donor node sends second information to the first IAB MT based on the first information, where the second information is used to request to provide the first service function for the terminal device; and the first donor node receives third information from the first IAB MT, where the third information indicates that the first IAB MT is allowed to provide the first service function for the terminal device. Based on this implementation, the first donor node may determine, based on the third information, that the first IAB MT is allowed to provide the first service function for the terminal device.

With reference to the first aspect, in some implementations of the first aspect, that the first donor node receives the first information includes: The first donor node receives the first information from the terminal device.

With reference to the first aspect, in some implementations of the first aspect, the method further includes: The first donor node sends first service function list information to the terminal device, where the first service function list information indicates at least one first service function supported by an IAB MT included in at least one IAB node served by the first donor node, the at least one first service function includes the first service function, and the at least one IAB node includes the first IAB node. Based on this implementation, the terminal device may learn of service functions that can be provided in the topology of the first donor node.

With reference to the first aspect, in some implementations of the first aspect, that the first donor node receives the first information includes: The first donor node receives the first information from an access and mobility management function AMF.

With reference to the first aspect, in some implementations of the first aspect, the method further includes: The first donor node receives registration request information from at least one IAB MT, where the registration request information indicates at least one second service function requested for registration by the IAB MT, and the at least one IAB MT includes the first IAB MT; and the first donor node separately sends registration request feedback information to the at least one IAB MT, where the registration request feedback information indicates a second service function authorized for registration and/or a second service function not authorized for registration in the at least one second service function requested for registration by the IAB MT, and the at least one first service function includes the second service function authorized for registration.

With reference to the first aspect, in some implementations of the first aspect, the method further includes: The first donor node sends the registration request information to the AMF; and the first donor node receives the registration request feedback information from the AMF.

With reference to the first aspect, in some implementations of the first aspect, the registration request information includes at least one of identification information, service type information, or service status information respectively corresponding to the at least one second service function; and the registration request feedback information includes identification information corresponding to the second service function authorized for registration and/or identification information corresponding to the second service function not authorized for registration.

With reference to the first aspect, in some implementations of the first aspect, the registration request feedback information includes reason information for denying authorization corresponding to the second service function not authorized for registration.

According to a second aspect, a communication method is provided. The method may be performed by a first donor node, or a chip or a chip system in a first donor node. The method includes: The first donor node receives first information, where the first information is used to request to provide a first service function for a terminal device; the first donor node sends third configuration information to a second IAB DU based on the first information, where the third configuration information indicates a correspondence between a third DRB identifier and a third BAP routing identifier, a second IAB node includes the second IAB DU, the second IAB node is an access IAB node of the terminal device, and at least one IAB node served by the first donor node includes the second IAB node; the first donor node sends management request information to a second donor node, where the management request information includes third quality of service requirement information corresponding to the first service function in a topology of the second donor node, first identification information assigned by the first donor node to a first IAB MT, transport network layer information corresponding to a DU included in the first donor node, and information about the third BAP routing identifier, a first IAB node served by the second donor node includes the first IAB MT, and the first IAB MT has the first service function; the first donor node receives management request response information from the second donor node, where the management request response information includes second identification information assigned by the second donor node to the first IAB MT, transport network layer information corresponding to a DU included in the second donor node, and information about a fourth BAP routing identifier corresponding to a first IAB DU, and the first IAB node further includes the first IAB DU; and the first donor node sends second RRC reconfiguration information to the terminal device based on the management request response information, where the second RRC reconfiguration information indicates PDCP configuration information and/or SDAP configuration information, PDCP configuration information corresponding to the terminal device is the same as PDCP configuration information corresponding to the first IAB MT, and SDAP configuration information corresponding to the terminal device is the same as SDAP configuration information corresponding to the first IAB MT.

Based on the foregoing technical solution, a service function is integrated on an IAB MT side. When the first donor node receives the first information for requesting to provide the first service function for the terminal device, the first donor node may send the third configuration information to the second IAB DU based on the first information. The second IAB node served by the first donor node includes the second IAB DU. The second IAB node is an access IAB node of the terminal device. The first donor node may send the management request information to the second donor node based on the first information. The first IAB MT included in the first IAB node served by the second donor node has the first service function. The second donor node may send the fourth configuration information to the first IAB DU based on the received management request information. The first IAB node further includes the first IAB DU. The second donor node may further send the RRC reconfiguration information to the first IAB MT. After receiving the management request response information from the second donor node, the first donor node may also send the RRC reconfiguration information to the terminal device to align the PDCP configuration information and/or the SDAP configuration information on the terminal device side and the first IAB MT side, so that the terminal device can communicate with the first IAB MT having the first service function, and the first IAB MT can provide the first service function for the terminal device.

With reference to the second aspect, in some implementations of the second aspect, the method further includes: The first donor node determines, based on the first information, a second data transmission path between the terminal device and the first donor node and second quality of service requirement information and third quality of service requirement information that correspond to the first service function in a topology of the first donor node; and the first donor node determines the third configuration information based on the second data transmission path, the second quality of service requirement information, and the third quality of service requirement information.

With reference to the second aspect, in some implementations of the second aspect, the method further includes: The first donor node sends service request information to the second donor node based on the first information, where the service request information is used to request to provide the first service function for the terminal device; and the first donor node receives service request response information from the second donor node, where the service request response information indicates that the first IAB MT is allowed to provide the first service function for the terminal device.

Based on this implementation, the first donor node may determine, based on the service request response information, that the first IAB MT is allowed to provide the first service function for the terminal device.

With reference to the second aspect, in some implementations of the second aspect, the method further includes: The first donor node sends first indication information to the second donor node, where the first indication information indicates at least one first service function supported by an IAB MT included in the at least one IAB node served by the first donor node; and the first donor node receives second indication information from the second donor node, where the second indication information indicates at least one third service function supported by an IAB MT included in at least one IAB node served by the second donor node, the at least one third service function includes the first service function, and the at least one IAB node served by the second donor node includes the first IAB node. Based on this implementation, the first donor node and the second donor node may learn, through interaction, of service functions supported in respective topologies.

With reference to the second aspect, in some implementations of the second aspect, that the first donor node receives the first information includes: The first donor node receives the first information from the terminal device.

With reference to the second aspect, in some implementations of the second aspect, the method further includes: The first donor node sends second service function list information to the terminal device, where the second service function list information indicates the at least one first service function supported by the IAB MT included in the at least one IAB node served by the first donor node and the at least one third service function supported by the IAB MT included in the at least one IAB node served by the second donor node. Based on this implementation, the terminal device may learn of service functions that can be provided for the terminal device by using the first donor node.

With reference to the second aspect, in some implementations of the second aspect, that the first donor node receives the first information includes: The first donor node receives the first information from an AMF.

According to a third aspect, a communication method is provided. The method may be performed by a second donor node, or a chip or a chip system in a second donor node. The method includes: The second donor node receives management request information from a first donor node, where the management request information includes third quality of service requirement information corresponding to a first service function in a topology of the second donor node, first identification information assigned by the first donor node to a first IAB MT, transport network layer information corresponding to a DU included in the first donor node, and information about a third BAP routing identifier corresponding to a second IAB DU served by the first donor node, a first IAB node served by the second donor node includes the first IAB MT, the first IAB MT has the first service function, a second IAB node served by the first donor node includes the second IAB DU, and the second IAB node is an access IAB node of a terminal device; the second donor node sends fourth configuration information to a first IAB DU based on the management request information, where the fourth configuration information indicates a correspondence between a fourth DRB identifier and a fourth BAP routing identifier, and the first IAB node further includes the first IAB DU; the second donor node sends first RRC reconfiguration information to the first IAB MT based on the management request information, where the first RRC reconfiguration information indicates PDCP configuration information and/or SDAP configuration information, PDCP configuration information corresponding to the first IAB MT is the same as PDCP configuration information corresponding to the terminal device, and SDAP configuration information corresponding to the first IAB MT is the same as SDAP configuration information corresponding to the terminal device; and the second donor node sends management request response information to the first donor node, where the management request response information includes second identification information assigned by the second donor node to the first IAB MT, transport network layer information corresponding to a DU included in the second donor node, and information about the fourth BAP routing identifier.

The method provided in the third aspect is a method on a second donor node side corresponding to the second aspect. For beneficial effects thereof, refer to the second aspect.

With reference to the third aspect, in some implementations of the third aspect, the method further includes: The second donor node determines a third data transmission path between the second donor node and the first IAB MT and the third quality of service requirement information based on the management request information; and the second donor node determines the fourth configuration information based on the third data transmission path and the third quality of service requirement information.

With reference to the third aspect, in some implementations of the third aspect, the method further includes: The second donor node receives service request information from the first donor node, where the service request information is used to request to provide the first service function for the terminal device; the second donor node sends fourth information to the first IAB MT based on the service request information, where the fourth information is used to request the first IAB MT to provide the first service function for the terminal device; the second donor node receives fifth information from the first IAB MT, where the fifth information indicates that the first IAB MT is allowed to provide the first service function for the terminal device; and the second donor node sends service request response information to the first donor node based on the fifth information, where the service request response information indicates that the first IAB MT is allowed to provide the first service function for the terminal device.

With reference to the third aspect, in some implementations of the third aspect, the method further includes: The second donor node receives first indication information from the second donor node, where the first indication information indicates at least one first service function supported by an IAB MT included in at least one IAB node served by the first donor node; and the second donor node receives second indication information sent to the second donor node, where the second indication information indicates at least one third service function supported by an IAB MT included in at least one IAB node served by the second donor node, the at least one third service function includes the first service function, and at least one IAB node served by the second donor node includes the first IAB node.

According to a fourth aspect, a communication apparatus is provided. The apparatus may be used in the first donor node according to the first aspect. The apparatus includes: a transceiver unit, configured to implement receiving and sending functions in the method according to the first aspect; and a processing unit, configured to implement a processing function such as determining the first configuration information and the second configuration information in the method according to the first aspect.

According to a fifth aspect, a communication apparatus is provided. The apparatus may be used in the first donor node according to the second aspect. The apparatus includes: a transceiver unit, configured to implement receiving and sending functions in the method according to the second aspect; and a processing unit, configured to implement a processing function such as determining the third configuration information in the method according to the second aspect.

According to a sixth aspect, a communication apparatus is provided. The apparatus may be used in the second donor node according to the third aspect. The apparatus includes: a transceiver unit, configured to implement receiving and sending functions in the method according to the third aspect; and a processing unit, configured to implement a processing function such as determining the fourth configuration information in the method according to the third aspect.

According to a seventh aspect, a communication apparatus is provided, including a processor and a transceiver. The transceiver is configured to: receive computer code or instructions and transmit the computer code or instructions to the processor. The processor runs the computer code or instructions, so that the method according to any one of the first aspect to the third aspect or the possible implementations of the first aspect to the third aspect is performed.

According to an eighth aspect, a communication system is provided, including: the first donor node in the method according to the second aspect and another communication device communicating with the first donor node; and the second donor node in the method according to the third aspect and another communication device communicating with the second donor node.

According to a ninth aspect, a computer-readable storage medium is provided. The computer-readable medium stores a computer program. When the computer program is run on a computer, the method according to any one of the first aspect to the third aspect or the possible implementations of the first aspect to the third aspect is performed.

According to a tenth aspect, a computer program product is provided, including a computer program. When the computer program is executed, the communication method according to any one of the first aspect to the third aspect or the possible implementations of the first aspect to the third aspect is implemented.

The solutions provided in the fourth aspect to the tenth aspect are used to implement or cooperate to implement the methods provided in the first aspect to the third aspect, and therefore can achieve beneficial effects the same as or corresponding to those in the first aspect to the third aspect. Details are not described herein again.

### BRIEF DESCRIPTION OF DRAWINGS

FIG. 1 is a diagram of a wireless relay scenario;
FIG. 2 is a diagram of a control plane protocol stack in an IAB network;
FIG. 3 is a diagram of a user plane protocol stack in an IAB network;
FIG. 4 is a diagram of an IAB network architecture to which an embodiment of this application is applicable;
FIG. 5 is a diagram of a service-based architecture based on an IAB MT according to an embodiment of this application;
FIG. 6 is a diagram of a user plane protocol stack from a terminal device to an IAB MT according to an embodiment of this application;
FIG. 7 is a schematic interaction flowchart of a communication method according to an embodiment of this application;
FIG. 8 is a diagram of IAB nodes in a topology of a first donor node;
FIG. 9 is a schematic interaction flowchart of an example of a communication method according to an embodiment of this application;
FIG. 10 is another schematic interaction flowchart of a communication method according to an embodiment of this application;
FIG. 11 is a diagram of IAB nodes in topologies of a first donor node and a second donor node;
FIG. 12 is a schematic interaction flowchart of another example of a communication method according to an embodiment of this application; and
FIG. 13 to FIG. 16 are block diagrams of communication apparatuses according to embodiments of this application.

### DESCRIPTION OF EMBODIMENTS

The following describes technical solutions in this application with reference to the accompanying drawings.

Embodiments of this application may be applied to various communication systems, for example, a wireless local area network (wireless local area network, WLAN) system, a narrow band-internet of things (narrow band-internet of things, NB-IoT) system, a global system for mobile communications (global system for mobile communications, GSM), an enhanced data rate for GSM evolution (enhanced data rate for gsm evolution, EDGE) system, a wideband code division multiple access (wideband code division multiple access, WCDMA) system, a code division multiple access 2000 (code division multiple access, CDMA 2000) system, a time division-synchronization code division multiple access (time division-synchronization code division multiple access, TD-SCDMA) system, a long term evolution (long term evolution, LTE) system, a satellite communication system, a sidelink (sidelink, SL), a fourth generation (fourth generation, 4G) system, a 5G system, a 6G system, or a new communication system developed in the future.

Terminal apparatuses in embodiments of this application may include various handheld devices, vehicle-mounted devices, wearable devices, or computing device that have a wireless communication function or other processing devices connected to a wireless modem. The terminal apparatus may be a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modulator-demodulator (modulator demodulator, modem), a laptop computer (laptop computer), a machine type communication (machine type communication, MTC) terminal, a wireless terminal in self-driving (self driving), or the like.

For example, a network device may be an access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband unit, BBU), a device that bears a base station function in device to device (device to device, D2D), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), or the like; or may be a gNB or a transmission point (for example, a TRP or a TP) in NR, or one antenna panel or a group of antenna panels (including a plurality of antenna panels) of a base station in NR; or may be a network node that forms a gNB or a transmission point, for example, a baseband unit (building baseband unit, BBU) or a distributed unit (distributed unit, DU). Alternatively, the network device may be a vehicle-mounted device, a wearable device, a network device in a 6G network, a network device in a future evolved PLMN network, a network device deployed on a satellite, or the like. This is not limited. In addition, based on areas of provided service coverage, base stations (base station, BS) may be classified into macro base stations for providing a macro cell (macro cell), micro base stations for providing a pico cell (pico cell), and femto base stations for providing a femto cell (femto cell), relay stations, access points, and the like. With continuous evolution of wireless communication technologies, a future base station may alternatively use another name.

To facilitate understanding of embodiments of this application, the following briefly describes technical solutions related to embodiments of this application.

Compared with 4G, 5G has stricter requirements on network performance indicators, for example, a capacity increased by 1,000 times, a wider coverage requirement, and ultra-high reliability and ultra-low latency. On the one hand, in consideration of abundant high-frequency carrier frequency resources, to meet ultra-high capacity requirements of 5G, high-frequency small cell networking is increasingly popular in hotspot areas. High-frequency carriers have poor propagation characteristics. Signals are severely attenuated after being blocked and have a small coverage area. Therefore, a large quantity of small cells need to be deployed densely. Correspondingly, providing optical fiber backhaul for the large quantity of densely deployed small cells is costly and the construction difficulty is high. Therefore, an economical and convenient backhaul solution is required. On the other hand, from the perspective of wide coverage requirements, deploying optical fibers to provide network coverage in some remote areas is challenging and costly, and flexible and convenient access and backhaul solutions also need to be designed. An IAB technology resolves the foregoing two problems by using a wireless transmission solution for both an access link (access link) and a backhaul link (backhaul link, BL). This reduces deployment of optical fibers.

In an IAB network, a relay node (relay node, RN) or an IAB node may provide a wireless access service for a terminal device, and service data of the terminal device may be transmitted by connecting the IAB node to an IAB donor through a wireless backhaul link. In this application, the IAB donor may also be referred to as a donor node or a donor gNodeB. The IAB node includes an MT and a DU. When the IAB node faces a parent node of the IAB node, the IAB node may be considered as a terminal device. In this case, the IAB node serves as the MT, and the parent node may be an IAB donor. When the IAB node faces a child node of the IAB node, the IAB node may be considered as a network device. In this case, the IAB node serves as the DU, and the child node may be another IAB node or a terminal device. The donor gNodeB may be an access network element having a complete base station function, or may be an access network element in a form in which a central unit (central unit, CU) and a distributed unit (distributed unit, DU) are separated. For ease of description, a central unit of the donor gNodeB may be referred to as a donor CU or referred to as a CU for short, and a distributed unit of the donor gNodeB may be referred to as a donor DU or referred to as a DU for short. The donor CU may alternatively be in a form in which a control plane (control plane, CP) and a user plane (user plane, UP) are separated. For example, the donor CU may include one CU-CP and one or more CU-UPs.

The IAB node may be connected to a core network by using the IAB donor. For example, the IAB donor may be connected to a core network element serving the terminal device, and provide a wireless backhaul function for the IAB node. For example, in a 5G standalone (standalone, SA) architecture, an IAB node is connected to a 5G core (5G core, 5GC) network through an IAB donor. In a 5G architecture of dual connectivity (dual connectivity, DC) or multi-connectivity (multi-connectivity, MC), an IAB node may be connected to an evolved packet core (evolved packet core, EPC) network through an evolved base station (evolved NodeB, eNB), or may be connected to a 5G core network through an IAB donor.

In the IAB network, one or more IAB nodes may be included on a transmission path between the terminal device and the IAB donor. Each IAB node needs to maintain a wireless backhaul link to the parent node and a radio link to the child node. If the child node of the IAB node is a terminal device, the radio link between the IAB node and the child node (the terminal device) is a wireless access link. If the child node of the IAB node is another IAB node, the radio link between the IAB node and the child node (the another IAB node) is a wireless backhaul link.

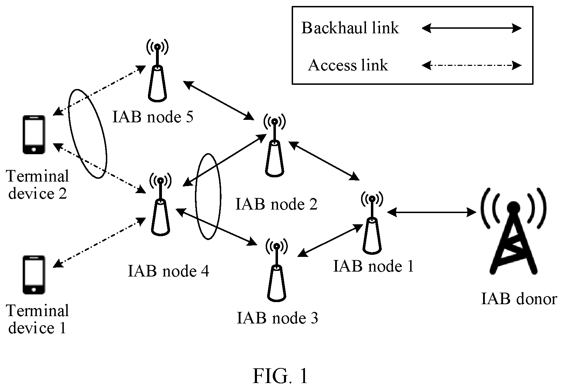

FIG. 1 is a diagram of a wireless relay scenario. On a path "terminal device 1→IAB node 4→IAB node 3→IAB node 1→IAB donor", the terminal device 1 accesses the IAB node 4 through a wireless access link, the IAB node 4 is connected to the IAB node 3 through a wireless backhaul link, the IAB node 3 is connected to the IAB node 1 through a wireless backhaul link, and the IAB node 1 is connected to an IAB donor through a wireless backhaul link.

In this embodiment of this application, an access IAB node is an IAB node accessed by the terminal device, and an intermediate IAB node is an IAB node providing a wireless backhaul service for a terminal device or an IAB node. As shown in FIG. 1, on a path "terminal device 1→IAB node 4→IAB node 3→IAB node 1→IAB donor", the IAB node 4 is an access IAB node, and the IAB node 3 and the IAB node 1 are intermediate IAB nodes. It should be noted that an IAB node is an access IAB node for a terminal device accessing the IAB node, and is an intermediate IAB node for a terminal device accessing another IAB node. Therefore, whether an IAB node is specifically an access IAB node or an intermediate IAB node is not fixed and needs to be determined based on a specific application scenario.

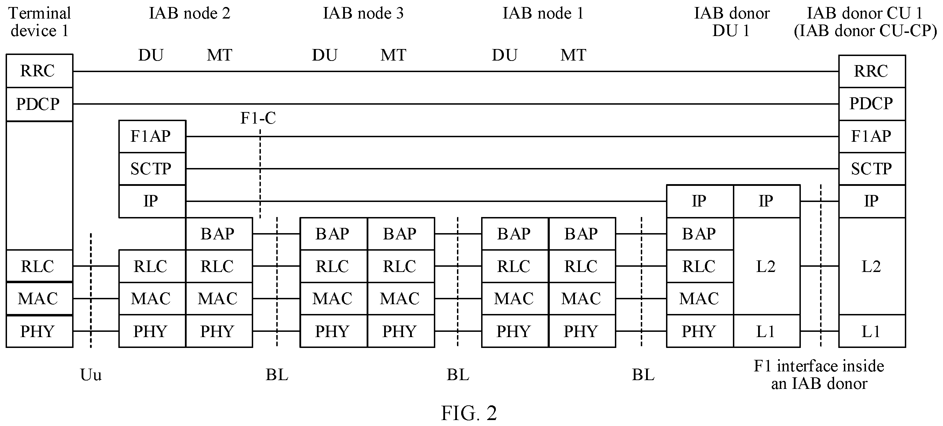

FIG. 2 is a diagram of a control plane protocol stack in an IAB network. The following provides descriptions with reference to FIG. 2. A Uu interface is set up between a terminal device 1 and an IAB2-DU, and peer protocol layers include a radio link control (radio link control, RLC) layer, a media access control (medium access control, MAC) layer, and a physical layer (physical layer, PHY). An F1-C interface is set up between the IAB2-DU and an IAB donor CU 1. Peer protocol layers include F1 application protocol (F1 application protocol, F1AP) layers and stream control transmission protocol (stream control transmission protocol, SCTP) layers. An IAB donor DU 1 and the IAB donor CU 1 are connected in a wired manner. Peer protocol layers include internet protocol (internet protocol, IP) layers, layers 2 (layer 2, L2), and layers 1 (layer 1, L1). BLs are set up between an IAB node 2 and an IAB node 3, between the IAB node 3 and an IAB node 1, and between the IAB node 1 and the IAB donor DU 1. Peer protocol layers include backhaul adaptation protocol (backhaul adaptation protocol, BAP) layers, RLC layers, MAC layers, and PHY layers. In addition, peer radio resource control (radio resource control, RRC) layers and packet data convergence protocol (packet data convergence protocol, PDCP) layers are set up between the terminal device 1 and the IAB donor CU 1. Peer IP layers are set up between the IAB2-DU and the IAB donor DU 1.

It can be learned that, compared with a control plane protocol stack of a single air interface, in the control plane protocol stack in the IAB network, a DU of the access IAB node implements functions of a gNB-DU of the single air interface, including a function of setting up a peer RLC layer, MAC layer, and PHY layer with the terminal device and a function of setting up a peer F1AP layer and SCTP layer with a CU. Therefore, in the IAB network, the DU of the access IAB node implements the function of the gNB-DU of the single air interface, and the IAB donor CU implements a function of a gNB-CU of the single air interface.

On the control plane, an RRC message is encapsulated in an F1AP message between the access IAB node and the IAB donor CU for transmission. Specifically, in an uplink direction, the terminal device 1 encapsulates the RRC message in a PDCP protocol data unit (protocol data unit, PDU), and sends the PDCP protocol data unit to the IAB2-DU after processing is sequentially performed at the RLC layer, the MAC layer, and the PHY layer. The IAB2-DU obtains the PDCP PDU after processing is sequentially performed at the PHY layer, the MAC layer, and the RLC layer, encapsulates the PDCP PDU in the F1AP message, and obtains an IP packet after processing is sequentially performed at the SCTP layer and the IP layer. An IAB2-MT sends the IP packet to an IAB3-DU after processing is separately performed at the BAP layer, the RLC layer, the MAC layer, and the PHY layer. The IAB3-DU obtains the IP packet after processing is sequentially performed at the PHY layer, the MAC layer, the RLC layer, and the BAP layer. Then, an IAB3-MT sends the IP packet to an IAB1-DU by using an operation similar to that of the IAB2-MT. Similarly, an IAB1-MT sends the IP packet to the IAB donor DU 1. After obtaining the IP packet through parsing, the IAB donor DU 1 sends the IP packet to the IAB donor CU 1. The IAB donor CU 1 obtains the RRC message after processing is sequentially performed on the IP packet at the SCTP layer, the F1AP layer, and the PDCP layer. Operations in a downlink direction are similar. Details are not described herein again.

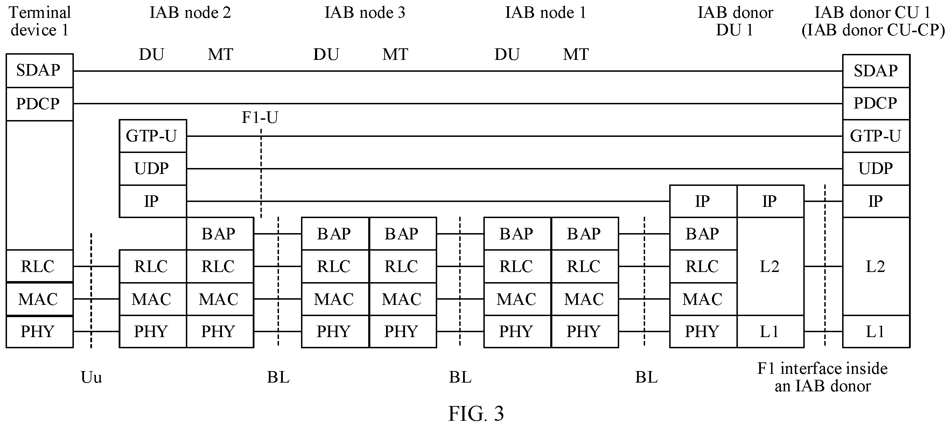

FIG. 3 is a diagram of a user plane protocol stack in an IAB network. The following provides descriptions with reference to FIG. 3. A Uu interface is set up between the terminal device 1 and the IAB2-DU. Peer protocol layers include RLC layers, MAC layers, and PHY layers. An F1-U interface is set up between the IAB2-DU and the IAB donor CU 1. Peer protocol layers include general packet radio service (general packet radio service, GPRS) tunneling protocol for the user plane (GPRS tunneling protocol for the user plane, GTP-U) layers and user datagram protocol (user datagram protocol, UDP) layers. The IAB donor DU 1 and the IAB donor CU 1 are connected in a wired manner. Peer protocol layers include IP layers, L2s, and L1s. BLs are set up between an IAB node 2 and an IAB node 3, between the IAB node 3 and an IAB node 1, and between the IAB node 1 and the IAB donor DU 1. Peer protocol layers include BAP layers, RLC layers, MAC layers, and PHY layers. In addition, a peer service data adaptation protocol (service data adaptation protocol, SDAP) layer and a peer PDCP layer are set up between the terminal device 1 and the IAB donor CU 1, and a peer IP layer is set up between the IAB2-DU and the IAB donor DU 1.

It can be learned that, compared with a user plane protocol stack of a single air interface, in the user plane protocol stack in the IAB network, a DU of the access IAB node implements some functions of a gNB-DU of the single air interface, including a function of setting up a peer RLC layer, MAC layer, and PHY layer with the terminal device and a function of setting up a peer GTP-U layer and UDP layer with the IAB donor CU 1. It may be understood that the DU of the access IAB node implements functions of the gNB-DU of the single air interface, and the IAB donor CU implements functions of the gNB-CU of the single air interface.

On the user plane, a PDCP data packet is encapsulated in a GTP-U tunnel between the access IAB node and the IAB donor CU for transmission. The GTP-U tunnel is set up on the F1-U interface.

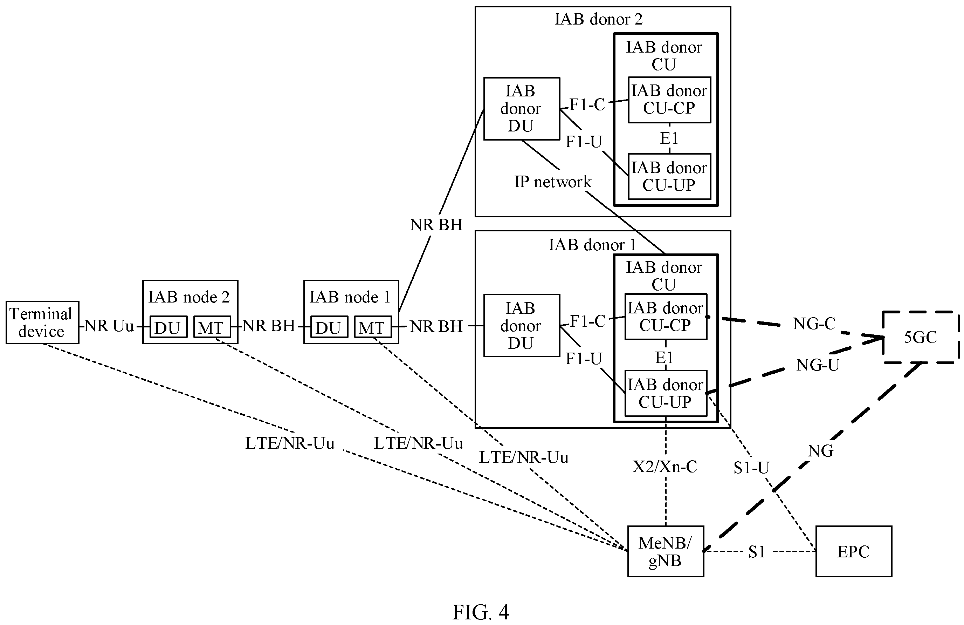

FIG. 4 is a diagram of an IAB network architecture to which an embodiment of this application is applicable. This application is mainly applied to an IAB network, including an SA IAB network and an NSA IAB network. FIG. 4 further shows, by using specific nodes, an example of an architecture in which an IAB node is connected to an IAB donor through a wireless backhaul link.

There is an F1 interface between a DU of each IAB node and an IAB donor CU. The F1 interface includes two parts: a control plane and a user plane. The user plane is maintained between an IAB-DU and an IAB donor CU-UP, and the control plane is maintained between the IAB-DU and an IAB donor CU-CP.

When the IAB node works in an SA mode, the IAB node may be connected to one parent node or dually connected to two parent nodes. The two parent nodes may be controlled by a same IAB donor or respectively controlled by different IAB donors. An F1 interface needs to be set up between the DU of the IAB node and the IAB donor, and the IAB donor may be connected to a 5GC, as shown by dark dashed lines in FIG. 4. The IAB donor CU-CP is connected to a control plane network element, for example, an access and mobility management function (access and mobility management function, AMF), in the 5GC through an NG control plane interface. The IAB donor CU-UP is connected to a user plane network element, for example, a user plane function (user plane function, UPF), in the 5GC through an NG user plane interface.

When the IAB node works in an NSA mode or an EN-DC mode, the IAB donor CU-UP may be connected to an EPC through an S1 user plane interface, for example, connected to a service gateway (serving gateway, SGW). There is an LTE-Uu air interface connection between a master base station (master eNodeB, MeNB) and an MT of the IAB node, and there is an X2-C interface between the MeNB and the IAB donor CU-CP. The MeNB is connected to the EPC through an S1 interface, as shown by a light dashed line in FIG. 4.

In another possible case, the MeNB in FIG. 4 may alternatively be replaced with a 5G base station gNB, and the LTE-Uu interface shown by a light dashed line in the figure is correspondingly replaced with an NR-Uu interface. The gNB may set up a user plane interface and/or a control plane interface with the 5GC. The gNB and the IAB donor provide a dual connectivity service for the IAB node. The gNB may serve as a primary base station or a secondary base station of the IAB node.

An SBA is an important feature of a 5G core network architecture. A network function is divided into reusable service function modules, and the service function modules communicate with each other through a unified lightweight interface. Traditional 2G, 3G, and 4G network architectures use a "point-to-point" service architecture. Interfaces between network elements need to be defined and configured in advance. The defined interfaces can be used only between two specific types of network elements, and are not flexible.

A service-based architecture has the following features: (1) Control plane network element deaggregation. Functions of the original network element are decoupled from each other. Same functions are aggregated in a form of a network function (network function, NF). (2) Service-based management: In step 1, after being rolled out, a new NF registers with a network repository function (network repository function, NRF). In step 2, the NRF notifies neighboring NFs of information about the NF. In step 3, the neighboring NFs interact with the new NF in a communication manner obtained in step 2. (3) Interface standardization: All service-oriented interfaces are implemented based on the hypertext transfer protocol secure (hypertext transfer protocol secure, HTTPS). In embodiments of this application, a network function may be understood as a service function.

The third generation partnership project (3^{rd} generation partnership project, 3GPP) defines the following service functions: an authentication service function (authentication server function, AUSF), an AMF, a session management function (session management function, SMF), an NRF, a policy control function (policy control function, PCF), a unified data management function (unified data management, UDM), a network capability exposure function (network exposure function, NEF), and the like.

For evolution of a 6G network architecture, most equipment vendors and operators propose a RAN service-based requirement, and introduce the idea of service-based architecture on a core network side into a next-generation RAN architecture design, to implement fast rollout and flexible deployment of a new service function on a RAN side through interface and function servitization, and simplify a network. However, currently, RAN functions are highly coupled, algorithms between the RAN functions are highly integrated, and uncertainty exists in the integration. Therefore, it is difficult to integrate a service function module on the RAN side. In addition, rollout of a new service function still depends on a core network, and system complexity is high.

Therefore, an embodiment of this application provides a communication method to integrate a service function on an IAB MT side based on an IAB network architecture, so that the IAB MT having the service function can provide the service function for a terminal device. In addition, a new service function can be quickly rolled out/updated, a network can be simplified, and implementation complexity can be reduced.

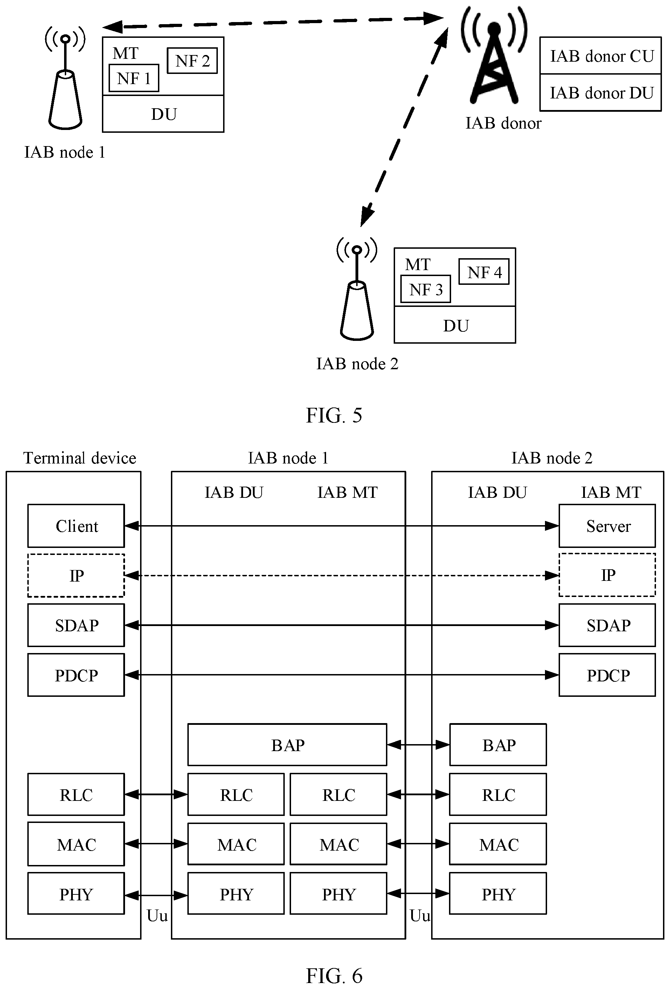

FIG. 5 is a diagram of a service-based architecture based on an IAB MT according to an embodiment of this application. Different from a conventional IAB architecture in which an IAB MT serves only as a terminal device and accesses an IAB-DU or an IAB donor DU of a parent node to provide a wireless backhaul service, the service-based architecture based on the IAB MT in this embodiment of this application has the following features:
(1) An existing CU/DU architecture of an IAB donor is retained. A traditional RAN communication function remains closed and service-based design is not performed.
(2) A network function/service function is integrated on an IAB MT side, for example, an NF 1 to an NF 4 in FIG. 5. The IAB MT may communicate with a remote server through a PDU session to implement online deployment and upgrade of a new function.
(3) Refer to D2D communication. The IAB MT may serve as a remote server as a terminal device to directly serve the terminal device and a network, meeting a localization service-based requirement. A local UPF/AMF does not need to be deployed, so that a service access delay can be reduced, and a network structure can be simplified.

FIG. 6 is a diagram of a user plane protocol stack from a terminal device to an IAB MT according to an embodiment of this application. Different from the user plane protocol stack in the IAB network shown in FIG. 3, the user plane protocol stack from the terminal device to the IAB MT in this embodiment of this application has the following features:
(1) For a RAN localization service, data transmission of the terminal device is terminated at the IAB MT, and data does not need to be sent to a core network through an IAB donor CU.
(2) Data of the terminal device does not pass through the IAB donor CU. Therefore, no F1-U-related protocol layer, for example, a GTP-U/UDP/IP protocol layer, is required.
(3) An application layer of the terminal device may serve as a client (client) to connect to a server (server) of an application layer of the IAB MT, to obtain a service of an NF.
(4) There may be an IP/TCP protocol layer above an SDAP protocol layer, and the IP/TCP protocol layer is used to identify an NF.

In this embodiment of this application, a control plane protocol stack from the terminal device/IAB MT to the IAB donor CU may reuse a control plane protocol stack in the IAB network shown in FIG. 2. The IAB donor CU is responsible for aligning PDCP and/or SDAP configurations between the terminal device and the IAB MT.

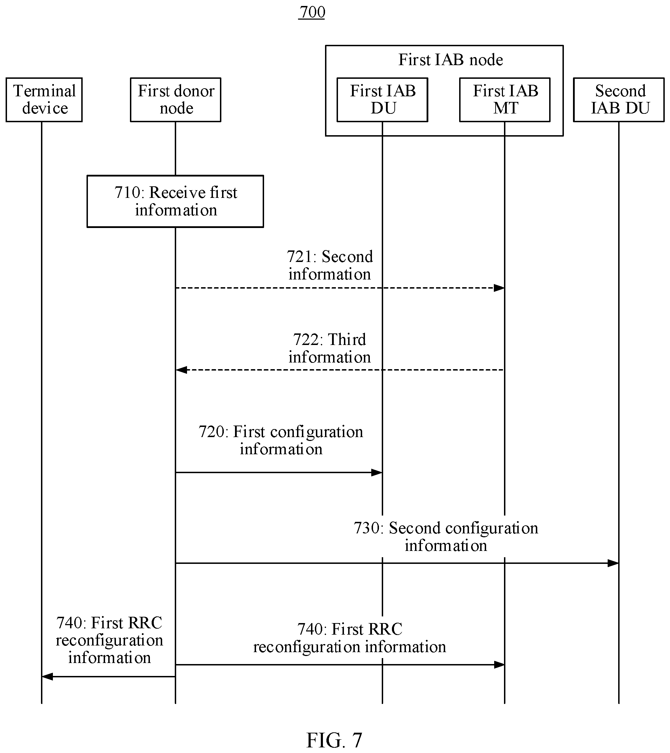

FIG. 7 is a schematic interaction flowchart of a communication method 700 according to an embodiment of this application. In this embodiment of this application, a first donor node may be referred to as a first donor gNodeB or a first IAB donor. A data transmission path in an IAB network includes a terminal device <-> a second IAB DU <-> a second IAB MT <-> a first IAB DU <-> a first IAB MT.

710: A first donor node receives first information, where the first information is used to request to provide a first service function for a terminal device. For example, the first service function in this embodiment of this application includes any one of an AUSF, an AMF, an SMF, an NRF, a PCF, a UDM, or an NEF.

Optionally, the first information may be sent by the terminal device to the first donor node, or may be sent by the AMF to the first donor node.

In an implementation, the terminal device sends the first information to the first donor node; and correspondingly, the first donor node receives the first information from the terminal device.

Optionally, before the terminal device sends the first information to the first donor node, the first donor node sends first service function list information to the terminal device, where the first service function list information may indicate at least one first service function supported by an IAB MT included in at least one IAB node served by the first donor node. Correspondingly, the terminal device receives the first service function list information from the first donor node, where the at least one first service function includes the first service function, the at least one IAB node includes a first IAB node, the first IAB node includes a first IAB MT, and the first IAB MT has the first service function. Optionally, the first donor node may notify the terminal device of the first service function list information in a broadcast or unicast manner. Based on this example, the terminal device may learn of service functions that can be provided in a topology of the first donor node.

In another implementation, the AMF sends the first information to the first donor node; and correspondingly, the first donor node receives the first information from the AMF.

Optionally, before the AMF sends the first information to the first donor node, the terminal device sends the first information to the AMF, where the first information is used to request to provide the first service function for the terminal device. Correspondingly, the AMF receives the first information from the terminal device, and determines, based on the first information, whether the first service function can be provided in the topology of the first donor node. If determining that the first service function can be provided in the topology of the first donor node, the AMF sends (forwards) the first information to the first donor node.

For example, the terminal device sends the first information to the AMF by using a non-access stratum (non-access stratum, NAS) message. Correspondingly, the AMF receives the NAS message from the terminal device, and obtains the first information based on the NAS message. The AMF determines, based on the first information, that the first service function can be provided in the topology of the first donor node. In this case, the AMF sends (forwards) the first information to the first donor node.

Optionally, the AMF may further send identification information of the first IAB MT having the first service function and/or identification information of a cell corresponding to the first IAB MT to the first donor node while sending the first information to the first donor node.

Optionally, before the terminal device sends the first information to the AMF, the AMF may send first service function list information to the terminal device (by using the NAS message), where the first service function list information may indicate at least one first service function supported by an IAB MT included in at least one IAB node served by the first donor node. Correspondingly, the terminal device receives the first service function list information from the AMF, where the at least one first service function includes the first service function, the at least one IAB node includes a first IAB node, the first IAB node includes a first IAB MT, and the first IAB MT has the first service function. Based on this example, the terminal device may learn of service functions that can be provided in a topology of the first donor node.

Optionally, the first service function list information may further indicate at least one first service function supported by a cell currently accessed by the terminal device, or at least one first service function supported by a cell included in a tracking area (tracking area, TA) in which the terminal device is currently located, or at least one first service function supported by a cell included in a current registration area (registration area, RA) of the terminal device.

Optionally, before the first donor node/the AMF sends the first service function list information to the terminal device, at least one IAB MT separately sends registration request information to the first donor node, where the registration request information indicates at least one second service function requested for registration by an IAB MT, and the at least one IAB MT includes the first IAB MT. Correspondingly, the first donor node receives the registration request information from the at least one IAB MT. The first donor node separately sends registration request feedback information to the at least one IAB MT, where the registration request feedback information indicates a second service function authorized for registration and/or a second service function not authorized for registration in at least one second service function requested for registration by the IAB MT, and the at least one IAB MT is an IAB MT in the topology of the first donor node. Optionally, the at least one first service function includes the second service function authorized for registration. An IAB MT in the at least one IAB MT receives, from the first donor node, the registration request feedback information corresponding to the IAB MT. Optionally, the IAB MT in the at least one IAB MT communicates with a remote server by using a PDU session based on the registration request feedback information, to download the second service function authorized for registration.

Optionally, any one of the at least one IAB MT may send the registration request information to the first donor node by using an RRC message, and the first donor node may send the registration request feedback information to the at least one IAB MT by using an RRC message.

For example, after the first donor node receives the registration request information from the at least one IAB MT, the first donor node sends, to the AMF, the registration request information respectively corresponding to the at least one IAB MT. Correspondingly, the AMF receives, from the first donor node, the registration request information respectively corresponding to the at least one IAB MT. The AMF sends, to the first donor node based on the registration request information, the registration request feedback information corresponding to the at least one IAB MT. Correspondingly, the first donor node receives the registration request feedback information from the AMF, and separately sends the registration request feedback information to the at least one IAB MT.

For example, after the first donor node receives the registration request information from the at least one IAB MT, the first donor node separately sends the registration request feedback information to the at least one IAB MT based on the registration request information respectively corresponding to the at least one IAB MT. The first donor node sends the registration request information to the AMF. Correspondingly, the AMF receives the registration request information from the first donor node. The AMF sends, to the first donor node based on the registration request information, the registration request feedback information corresponding to the at least one IAB MT. Correspondingly, the first donor node receives the registration request feedback information from the AMF. The registration request feedback information sent by the first donor node to the at least one IAB MT is the same as the registration request feedback information sent by the AMF to the first donor node.

Optionally, the at least one IAB MT separately sends the registration request information to the AMF by using a NAS message, where the registration request information indicates at least one second service function requested for registration by the IAB MT. Correspondingly, the AMF receives the registration request information from the at least one IAB MT. The AMF separately sends the registration request feedback information to the at least one IAB MT by using a NAS message based on the registration request information respectively corresponding to the at least one IAB MT, where the registration request feedback information indicates a second service function authorized for registration and/or a second service function not authorized for registration in the at least one second service function requested for registration by the IAB MT. Optionally, the at least one first service function includes the second service function authorized for registration. Optionally, the AMF may send, to the first donor node by using an N2 message, the registration request feedback information respectively corresponding to the at least one IAB MT.

Optionally, the registration request information includes at least one of identification information, service type information, or service status information respectively corresponding to the at least one second service function. The registration request feedback information includes identification information corresponding to the second service function authorized for registration and/or identification information corresponding to the second service function not authorized for registration.

For example, a service type indicated by the service type information includes a service type such as artificial intelligence (artificial intelligence, AI), sensing, positioning, or computation. For example, status information indicated by the service status information includes stateful and stateless. For example, when the status information indicated by the service status information corresponding to the second service function is stateful, if a context corresponding to the second service function exists, the context corresponding to the second service function needs to be stored to maintain service continuity of the second service function. For another example, when the status information indicated by the service status information corresponding to the second service function is stateless, the service continuity of the second service function may be maintained without a need to store the context corresponding to the second service function.

For example, the registration request feedback information includes the identification information corresponding to the second service function authorized for registration. For example, the registration request feedback information includes the identification information corresponding to the second service function not authorized for registration. For example, the registration request feedback information includes the identification information corresponding to the second service function authorized for registration and the identification information corresponding to the second service function not authorized for registration.

Optionally, the registration request feedback information includes reason information for denying authorization corresponding to the second service function not authorized for registration. For example, the registration request feedback information includes the identification information corresponding to the second service function not authorized for registration and the reason information for denying authorization corresponding to the second service function not authorized for registration. For example, the registration request feedback information includes the identification information corresponding to the second service function authorized for registration, the identification information corresponding to the second service function not authorized for registration, and the reason information for denying authorization corresponding to the second service function not authorized for registration.

Optionally, the at least one IAB MT separately sends service configuration update request information to the first donor node. The service configuration update request information is used to request to update a service function list of the IAB MT. The service configuration update request information includes at least one of the following: identification information corresponding to a service function requested to be added, identification information corresponding to a service function requested to be deleted, or identification information and service parameter information that correspond to a service function requested to be updated. The service parameter information includes at least one of the service type information or the service status information. The first donor node receives the service configuration update request information from the at least one IAB MT. The first donor node separately sends service configuration update response information to the at least one IAB MT based on the service configuration update request information of the at least one IAB MT. The service configuration update response information includes at least one of the following: identification information corresponding to a service function authorized for addition, identification information corresponding to a service function authorized for deletion, or identification information corresponding to a service function authorized for update. The IAB MT receives the service configuration update response information from the first donor node. Optionally, the IAB MT communicates with a remote server by using a PDU session based on the service configuration update response information, to download the service function authorized for addition and/or update the service function authorized for update.

Optionally, the service configuration update response information may include at least one of the following: identification information corresponding to a service function not authorized for addition, identification information corresponding to a service function not authorized for deletion, or identification information corresponding to a service function not authorized for update. This is not limited in this application.

For example, the at least one IAB MT separately sends the service configuration update request information to the first donor node. Correspondingly, the first donor node receives the service configuration update request information from the at least one IAB MT. The first donor node sends, to the AMF, the service configuration update request information respectively corresponding to the at least one IAB MT. The AMF receives, from the first donor node, the service configuration update request information respectively corresponding to the at least one IAB MT, and sends, to the first donor node based on the service configuration update request information, the service configuration update response information respectively corresponding to the at least one IAB MT. Correspondingly, the first donor node receives, from the AMF, the service configuration update response information respectively corresponding to the at least one IAB MT, and separately sends the service configuration update response information to the at least one IAB MT. The IAB MT receives the service configuration update response information from the first donor node. Optionally, the IAB MT communicates with a remote server by using a PDU session based on the service configuration update response information, to download the service function authorized for addition and/or update the service function authorized for update.

For example, any one of the at least one IAB MT may send the service configuration update request information to the first donor node by using an RRC message, and the first donor node may send the service configuration update response information to the at least one IAB MT by using an RRC message.

Optionally, the at least one IAB MT separately sends the service configuration update request information to the AMF by using a NAS message. The service configuration update request information is used to request to update a service function list of the IAB MT. The service configuration update request information includes at least one of the following: identification information corresponding to a service function requested to be added, identification information corresponding to a service function requested to be deleted, or identification information and service parameter information that correspond to a service function requested to be updated. Correspondingly, the AMF receives the service configuration update request information from the at least one IAB MT. The AMF separately sends the service configuration update response information to the at least one IAB MT by using a NAS message based on the service configuration update request information respectively corresponding to the at least one IAB MT. The service configuration update response information includes at least one of the following: identification information corresponding to a service function authorized for addition, identification information corresponding to a service function authorized for deletion, or identification information corresponding to a service function authorized for update. Optionally, the AMF may send, to the first donor node by using an N2 message, the service configuration update response information respectively corresponding to the at least one IAB MT.

The IAB MT may update the service function list of the IAB MT by sending the service configuration update request information, to quickly roll out/update a service function.

720: The first donor node sends first configuration information to the first IAB DU based on the first information, where the first configuration information indicates a correspondence between a first data radio bearer (data radio bearer, DRB) identifier and a first backhaul adaptation protocol (backhaul adaptation protocol, BAP) routing identifier (routing identity, routing ID), and the first IAB node includes the first IAB MT and the first IAB DU.

730: The first donor node sends second configuration information to a second IAB DU based on the first information, where the second configuration information indicates a correspondence between a second DRB identifier and a second BAP routing identifier, a second IAB node includes the second IAB DU, and the second IAB node is an access IAB node of the terminal device.

Step 720 and step 730 may be simultaneously performed, or step 730 may be performed before step 720. This is not limited in this embodiment of this application.

Optionally, before the first donor node sends the first configuration information and the second configuration information, the first donor node determines, based on the first information, a first data transmission path between the terminal device and the first IAB MT and first quality of service requirement information corresponding to the first service function in the topology of the first donor node. The first donor node determines the first configuration information and the second configuration information based on the first data transmission path and the first quality of service requirement information.

Optionally, the first donor node establishes a context of the terminal device at the second IAB DU, and does not need to establish an F1-U tunnel for a DRB. Therefore, data does not need to pass through the first donor node.

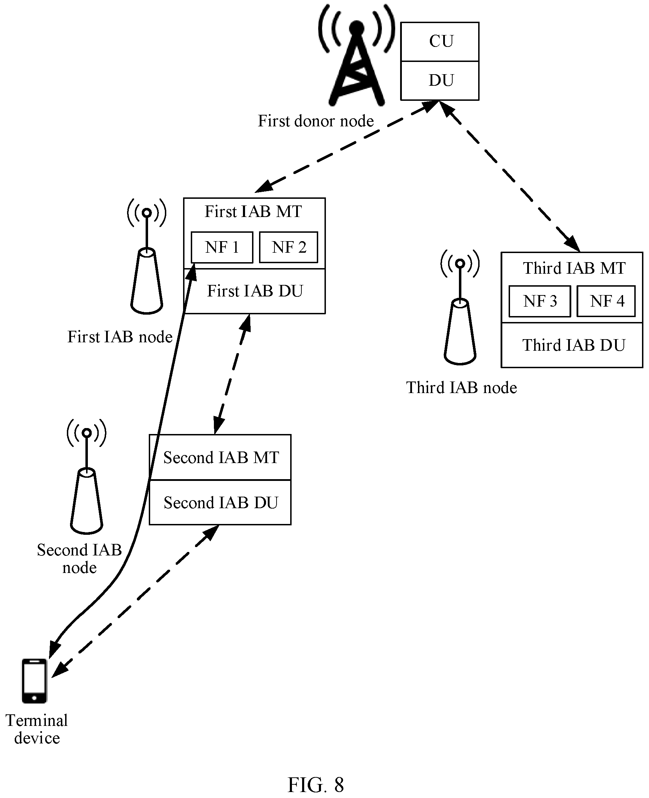

FIG. 8 is a diagram of IAB nodes in a topology of a first donor node. For example, the first service function is an NF 1, and a first data transmission path between a terminal device and a first IAB MT is the terminal device <-> a second IAB DU <-> a second IAB MT <-> a first IAB DU <-> the first IAB MT. A second IAB node includes the second IAB DU and the second IAB MT. When the first IAB DU receives a data packet from the first IAB MT, the first IAB DU replaces a first DRB identifier carried in the data packet with a first BAP routing identifier, and sends the data packet to the second IAB MT. When the second IAB DU receives a data packet from the terminal device, the second IAB DU replaces a second DRB identifier carried in the data packet with a second BAP routing identifier, and sends the data packet to the second IAB MT.

For example, when the first IAB DU receives a data packet from the second IAB MT, the first IAB DU determines whether a BAP routing identifier carried in the data packet is the same as a BAP routing identifier configured by the first donor node; if the BAP routing identifier carried in the data packet is the same as the BAP routing identifier configured by the first donor node, removes a BAP header of the data packet; further determines whether the data packet carries a tunnel endpoint identifier (full tunnel endpoint identifier, FTEID); and if the data packet does not carry the FTEID, sends the data packet to the first IAB MT.

Optionally, when performing data packet routing, an IAB node may search both an uplink routing table and a downlink routing table based on a BAP routing ID of the data packet. If a next-hop IAB node matching the BAP routing ID is found, the data packet is sent to the next-hop IAB node.

Optionally, before step 720 and step 730, the first donor node determines, based on the first information, that the first IAB MT is allowed to provide the first service function for the terminal device. The following provides example descriptions with reference to step 721 and step 722.

Optionally, in 721, the first donor node sends second information to the first IAB MT based on the first information, where the second information is used to request to provide the first service function for the terminal device, the first IAB MT has the first service function, and a first IAB node served by the first donor node includes the first IAB MT.

722: The first IAB MT receives the second information from the first donor node; the first IAB MT determines, based on a current load, whether to provide the first service function for the terminal device; if the first IAB MT determines, based on the current load, to provide the first service function for the terminal device, the first IAB MT sends third information to the first donor node, where the third information indicates that the first IAB MT is allowed to provide the first service function for the terminal device; and the first donor node receives the third information from the first IAB MT. For example, when the current load of the first IAB MT is relatively light, the first IAB MT determines to provide the first service function for the terminal device; or when the current load of the first IAB MT is relatively heavy, the first IAB MT determines not to provide the first service function for the terminal device.

For example, the first donor node determines, based on the first information, that the first IAB MT included in the first IAB node served by the first donor node has the first service function. The first donor node sends the second information to the first IAB MT by using an RRC message, where the second information is used to request to provide the first service function for the terminal device. The first IAB MT receives the RRC message from the first donor node, and obtains the second information based on the RRC message. If the first IAB MT determines, based on the current load, to provide the first service function for the terminal device, the first IAB MT sends the third information to the first donor node by using the RRC message, where the third information indicates that the first IAB MT is allowed to provide the first service function for the terminal device. The first donor node receives the RRC message from the first IAB MT, and obtains the third information based on the RRC message.

For example, the first donor node determines, based on the first information, that the first IAB MT included in the first IAB node served by the first donor node has the first service function. The first donor node sends, by using an F1 message, the second information to the first IAB DU included in the first IAB node, where the second information is used to request to provide the first service function for the terminal device. The first IAB DU receives the F1 message from the first donor node, and obtains the second information based on the F1 message. The first IAB DU forwards the second information to the first IAB MT. If the first IAB MT determines, based on the current load, to provide the first service function for the terminal device, the first IAB MT sends the third information to the first IAB DU, where the third information indicates that the first IAB MT is allowed to provide the first service function for the terminal device. The first IAB DU sends (forwards) the third information to the first donor node by using the F1 message. The first donor node receives the F1 message from the first IAB DU, and obtains the third information based on the F1 message.

Optionally, because the first IAB MT has the first service function, the first donor node may consider by default that the first IAB MT is allowed to provide the first service function for the terminal device, and therefore does not need to send the second information to the first IAB MT.

740: The first donor node separately sends first RRC reconfiguration information to the first IAB MT and the terminal device based on the first information, where the first RRC reconfiguration information indicates PDCP configuration information and/or SDAP configuration information; and correspondingly, the first IAB MT receives the first RRC reconfiguration information from the first donor node, and the terminal device receives the first RRC reconfiguration information from the first donor node. The RRC reconfiguration information separately sent by the first donor node to the first IAB MT and the terminal device is the same, and is used to align PDCP configuration information and/or SDAP configuration information on a terminal device side and a first IAB MT (first IAB node) side.

For example, the first donor node performs RRC reconfiguration on the first IAB MT and the terminal device to generate the first RRC reconfiguration information, and the first donor node separately sends the first RRC reconfiguration information to the first IAB MT and the terminal device.

Optionally, the terminal device communicates with the first IAB MT about the first service function, so that the first IAB MT can provide the first service function for the terminal device.

In the technical solution provided in this embodiment of this application, a service function is integrated on an IAB MT side. When the first donor node receives the first information for requesting to provide the first service function for the terminal device, the first donor node may send the first configuration information to the first IAB DU based on the first information, and send the second configuration information to the second IAB DU included in the access IAB node of the terminal device, where the first IAB node includes the first IAB DU and the first IAB MT, and the first IAB MT has the first service function. The first donor node may further separately send RRC reconfiguration information to the first IAB MT and the terminal device based on the first information to align PDCP configuration information and/or SDAP configuration information on a terminal device side and a first IAB MT side, so that the terminal device can communicate with the first IAB MT having the first service function, and the first IAB MT can provide the first service function for the terminal device. In addition, the service function is integrated on the IAB MT side to simplify a network and reduce implementation complexity.

For ease of understanding of embodiments of this application, a communication method provided in embodiments of this application is described below with reference to specific examples.

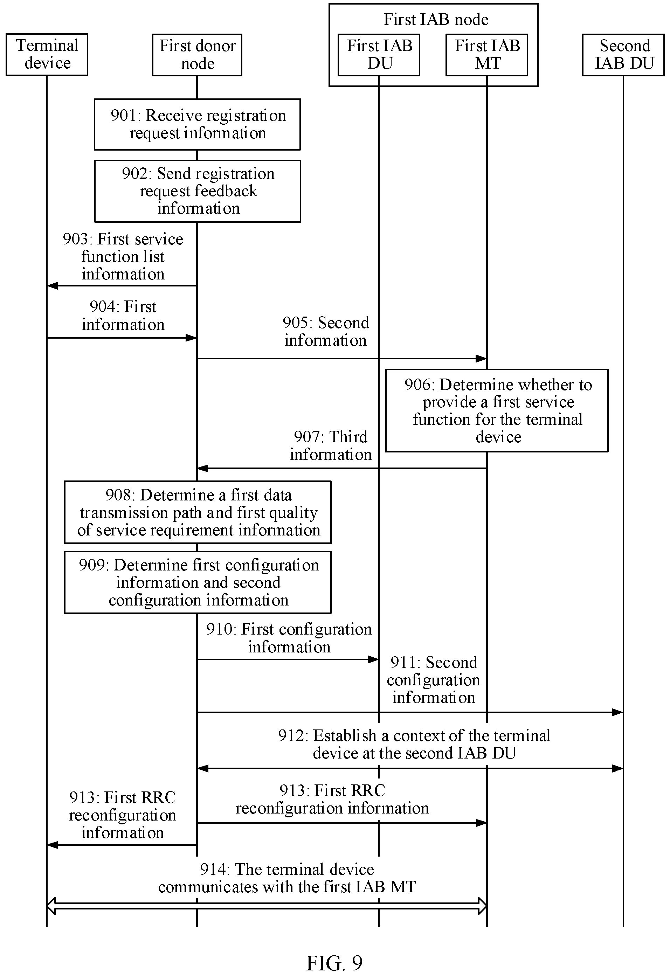

FIG. 9 is a schematic interaction flowchart of an example of a communication method according to an embodiment of this application. A first donor node may be referred to as a first donor gNodeB or a first IAB donor. A data transmission path in an IAB network includes a terminal device <-> a second IAB DU <-> a second IAB MT <-> a first IAB DU <-> a first IAB MT.

901: At least one IAB MT separately sends registration request information to the first donor node, where the registration request information indicates at least one second service function requested for registration by an IAB MT, and the at least one IAB MT includes the first IAB MT; and correspondingly, the first donor node receives the registration request information from the at least one IAB MT, where the at least one IAB MT is an IAB MT in a topology of the first donor node.

902: The first donor node separately sends registration request feedback information to the at least one IAB MT, where the registration request feedback information indicates a second service function authorized for registration and/or a second service function not authorized for registration in the at least one second service function requested for registration by the IAB MT. Correspondingly, an IAB MT in the at least one IAB MT receives, from the first donor node, the registration request feedback information corresponding to the IAB MT. Optionally, the IAB MT in the at least one IAB MT communicates with a remote server by using a PDU session based on the registration request feedback information, to download the second service function authorized for registration.

For example, after the first donor node receives the registration request information from the at least one IAB MT, the first donor node sends, to the AMF, the registration request information respectively corresponding to the at least one IAB MT. Correspondingly, the AMF receives, from the first donor node, the registration request information respectively corresponding to the at least one IAB MT. The AMF sends, to the first donor node based on the registration request information, the registration request feedback information corresponding to the at least one IAB MT. Correspondingly, the first donor node receives the registration request feedback information from the AMF, and separately sends the registration request feedback information to the at least one IAB MT.

Optionally, any one of the at least one IAB MT may send the registration request information to the first donor node by using an RRC message, and the first donor node may send the registration request feedback information to the at least one IAB MT by using an RRC message.

Optionally, the registration request information includes at least one of identification information, service type information, or service status information respectively corresponding to the at least one second service function. The registration request feedback information includes identification information corresponding to the second service function authorized for registration and/or identification information corresponding to the second service function not authorized for registration.

For example, a service type indicated by the service type information includes a service type such as AI, sensing, positioning, or computation. For example, status information indicated by the service status information includes stateful and stateless. For example, when the status information indicated by the service status information corresponding to the second service function is stateful, if a context corresponding to the second service function exists, the context corresponding to the second service function needs to be stored to maintain service continuity of the second service function. For another example, when the status information indicated by the service status information corresponding to the second service function is stateless, the service continuity of the second service function may be maintained without a need to store the context corresponding to the second service function.

Optionally, the registration request feedback information includes reason information for denying authorization corresponding to the second service function not authorized for registration. For example, the registration request feedback information includes the identification information corresponding to the second service function not authorized for registration and the reason information for denying authorization corresponding to the second service function not authorized for registration. For example, the registration request feedback information includes the identification information corresponding to the second service function authorized for registration, the identification information corresponding to the second service function not authorized for registration, and the reason information for denying authorization corresponding to the second service function not authorized for registration.

903: The first donor node sends first service function list information to the terminal device, where the first service function list information indicates at least one first service function supported by an IAB MT included in at least one IAB node served by the first donor node, the at least one first service function includes the second service function authorized for registration by the at least one IAB MT, the at least one first service function/the second service function authorized for registration by the at least one IAB MT includes the first service function, the at least one IAB node served by the first donor node includes a first IAB node, and the first IAB node includes the first IAB MT. Correspondingly, the terminal device receives the first service function list information from the first donor node.

Optionally, the at least one IAB MT separately sends the service configuration update request information to the first donor node. The service configuration update request information is used to request to update a service function list of the IAB MT. The service configuration update request information includes at least one of the following: identification information corresponding to a service function requested to be added, identification information corresponding to a service function requested to be deleted, or identification information and service parameter information that correspond to a service function requested to be updated. The first donor node receives the service configuration update request information from the at least one IAB MT. The first donor node separately sends service configuration update response information to the at least one IAB MT based on the service configuration update request information of the at least one IAB MT. The service configuration update response information includes at least one of the following: identification information corresponding to a service function authorized for addition, identification information corresponding to a service function authorized for deletion, or identification information corresponding to a service function authorized for update. The IAB MT receives the service configuration update response information from the first donor node. Optionally, the IAB MT communicates with a remote server by using a PDU session based on the service configuration update response information, to download the service function authorized for addition and/or update the service function authorized for update.

For example, the at least one IAB MT separately sends the service configuration update request information to the first donor node. Correspondingly, the first donor node receives the service configuration update request information from the at least one IAB MT. The first donor node sends, to the AMF, the service configuration update request information respectively corresponding to the at least one IAB MT. The AMF receives, from the first donor node, the service configuration update request information respectively corresponding to the at least one IAB MT, and sends, to the first donor node based on the service configuration update request information, the service configuration update response information respectively corresponding to the at least one IAB MT. Correspondingly, the first donor node receives, from the AMF, the service configuration update response information respectively corresponding to the at least one IAB MT, and separately sends the service configuration update response information to the at least one IAB MT. The IAB MT receives the service configuration update response information from the first donor node. Optionally, the IAB MT communicates with a remote server by using a PDU session based on the service configuration update response information, to download the service function authorized for addition and/or update the service function authorized for update.

For example, any one of the at least one IAB MT may send the service configuration update request information to the first donor node by using an RRC message, and the first donor node may send the service configuration update response information to the at least one IAB MT by using an RRC message.

904: The terminal device sends first information to the first donor node, where the first information is used to request to provide the first service function for the terminal device; and correspondingly, the first donor node receives the first information from the terminal device.

905: The first donor node determines, based on the first information, that a first IAB MT included in a first IAB node served by the first donor node has the first service function; and the first donor node sends second information to the first IAB MT, where the second information is used to request to provide the first service function for the terminal device. Correspondingly, the first IAB MT receives the first information from the first donor node.

906: The first IAB MT determines, based on a current load, whether to provide the first service function for the terminal device.

907: If the first IAB MT determines, based on the current load, to provide the first service function for the terminal device, the first IAB MT sends third information to the first donor node, where the third information indicates that the first IAB MT is allowed to provide the first service function for the terminal device. Correspondingly, the first donor node receives the third information from the first IAB MT.

For example, the first donor node may send the second information to the first IAB MT by using an RRC message, and the first IAB MT may send the third information to the first donor node by using an RRC message.

908: The first IAB MT determines, based on the third information, a first data transmission path between the terminal device and the first IAB MT and first quality of service requirement information corresponding to the first service function in a topology of the first donor node.

909: The first donor node determines, based on the first data transmission path and the first quality of service requirement information, first configuration information corresponding to a first IAB DU and second configuration information corresponding to a second IAB DU, where the first configuration information indicates a correspondence between a first DRB identifier and a first BAP routing identifier, the second configuration information indicates a correspondence between a second DRB identifier and a second BAP routing identifier, the first IAB node includes the first IAB DU and the first IAB MT, and a second IAB node includes the second IAB DU, and the second IAB node is an access IAB node of the terminal device.

910: The first donor node sends the first configuration information to the first IAB DU; and correspondingly, the first IAB DU receives the first configuration information from the first donor node.

911: The first donor node sends the second configuration information to the second IAB DU; and correspondingly, the second IAB DU receives the second configuration information from the first donor node. Step 910 and step 911 may be simultaneously performed, or step 911 may be performed before step 910. This is not limited in this embodiment of this application.

912: The first donor node establishes a context of the terminal device at the second IAB DU, and does not need to establish an F1-U tunnel for a DRB. Therefore, data does not need to pass through the first donor node.

913: The first donor node separately sends first RRC reconfiguration information to the first IAB MT and the terminal device, where the first RRC reconfiguration information indicates PDCP configuration information and/or SDAP configuration information; and correspondingly, the first IAB MT receives the first RRC reconfiguration information from the first donor node, and the terminal device receives the first RRC reconfiguration information from the first donor node, where the RRC reconfiguration information separately sent by the first donor node to the first IAB MT and the terminal device is the same, and is used to align PDCP configuration information and/or SDAP configuration information on a terminal device side and a first IAB MT (first IAB node) side.

For example, the first donor node performs RRC reconfiguration on the first IAB MT and the terminal device to generate the first RRC reconfiguration information, and the first donor node separately sends the first RRC reconfiguration information to the first IAB MT and the terminal device.

914: The terminal device communicates with the first IAB MT, so that the first IAB MT can provide the first service function for the terminal device.

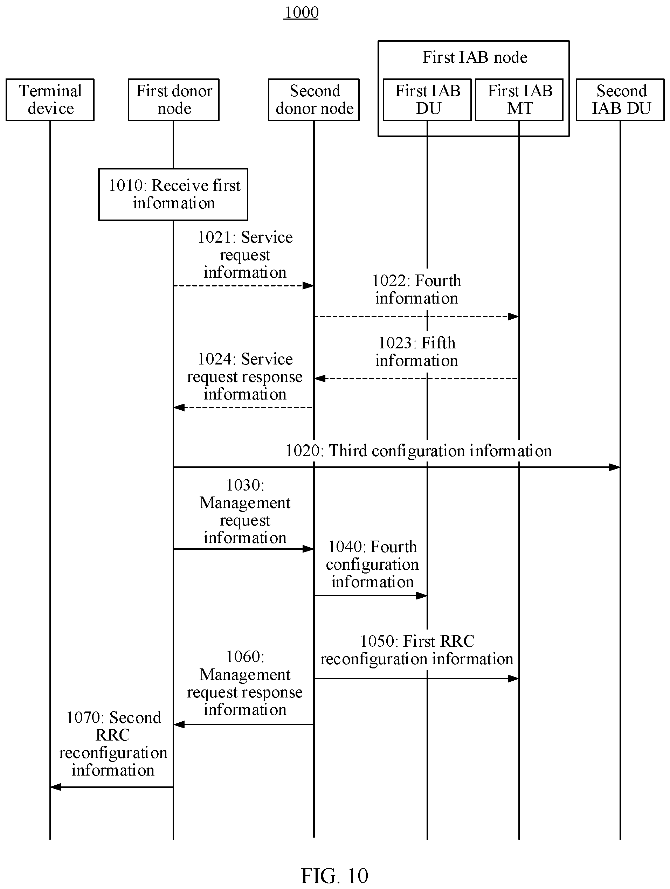

FIG. 10 is another schematic interaction flowchart of a communication method 1000 according to an embodiment of this application. In this embodiment of this application, a first donor node may be referred to as a first donor gNodeB or a first IAB donor, and a second donor node may be referred to as a second donor gNodeB or a second IAB donor. A data transmission path in an IAB network includes a terminal device <-> a second IAB DU <-> a second IAB MT <-> the first donor node <-> the second donor node <-> a first IAB MT.

1010: The first donor node receives first information, where the first information is used to request to provide a first service function for the terminal device.

Optionally, the first information may be sent by the terminal device to the first donor node, or may be sent by an AMF to the first donor node.

In an implementation, the terminal device sends the first information to the first donor node; and correspondingly, the first donor node receives the first information from the terminal device.

Optionally, before the terminal device sends the first information to the first donor node, the first donor node sends second service function list information to the terminal device, where the second service function list information indicates at least one first service function supported by an IAB MT included in at least one IAB node served by the first donor node and at least one third service function supported by an IAB MT included in at least one IAB node served by the second donor node. Correspondingly, the terminal device receives the second service function list information from the first donor node, where the at least one third service function includes the first service function, the at least one IAB node served by the second donor node includes a first IAB node, the first IAB node includes the first IAB MT, and the first IAB MT has the first service function. Optionally, the first donor node may notify the terminal device of the second service function list information in a broadcast or unicast manner. Based on this example, the terminal device may learn of service functions that can be provided for the terminal device by using the first donor node.

In another implementation, the AMF sends the first information to the first donor node; and correspondingly, the first donor node receives the first information from the AMF.

Optionally, before the AMF sends the first information to the first donor node, the terminal device sends the first information to the AMF, where the first information is used to request to provide the first service function for the terminal device. Correspondingly, the AMF receives the first information from the terminal device, and sends (forwards) the first information to the first donor node. For example, the terminal device may send the first information to the AMF by using a NAS message.

Optionally, the AMF may further send identification information of the first IAB MT having the first service function and/or identification information of a cell corresponding to the first IAB MT to the first donor node while sending the first information to the first donor node.

Optionally, before the terminal device sends the first information to the AMF, the AMF may send (by using the NAS message) second service function list information to the terminal device, where the second service function list information indicates at least one first service function supported by an IAB MT included in at least one IAB node served by the first donor node and at least one third service function supported by an IAB MT included in at least one IAB node served by the second donor node. Correspondingly, the terminal device receives the second service function list information from the first donor node, where the at least one third service function includes the first service function, the at least one IAB node served by the second donor node includes a first IAB node, the first IAB node includes the first IAB MT, and the first IAB MT has the first service function. Based on this example, the terminal device may learn of service functions that can be provided for the terminal device by using the first donor node.

Optionally, before the first donor node receives the first information, the first donor node sends first indication information to the second donor node, where the first indication information indicates the at least one first service function supported by the IAB MT included in the at least one IAB node served by the first donor node; and correspondingly, the second donor node receives the first indication information from the first donor node. The second donor node sends second indication information to the first donor node, where the second indication information indicates the at least one third service function supported by the IAB MT included in the at least one IAB node served by the second donor node; and correspondingly, the first donor node receives the second indication information from the second donor node. For example, the first donor node interacts with the second donor node through an Xn interface. Based on this optional solution, the first donor node and the second donor node may learn, through interaction, of service functions supported in respective topologies.

Optionally, before the first donor node/the AMF sends the second service function list information to the terminal device, at least one IAB MT served by the first donor node separately sends first registration request information to the first donor node, where the first registration request information indicates at least one second service function requested for registration by an IAB MT. Correspondingly, the first donor node receives the first registration request information from the at least one IAB MT served by the first donor node. The first donor node separately sends first registration request feedback information to the at least one IAB MT served by the first donor node, where the first registration request feedback information indicates a second service function authorized for registration and/or a second service function not authorized for registration in the at least one second service function requested for registration by the IAB MT. Optionally, the at least one first service function includes the second service function authorized for registration. The IAB MT in the at least one IAB MT served by the first donor node receives, from the first donor node, the first registration request feedback information corresponding to the IAB MT. Optionally, the IAB MT in the at least one IAB MT served by the first donor node communicates with a remote server by using a PDU session based on the first registration request feedback information, to download the second service function authorized for registration.

Optionally, any one of the at least one IAB MT served by the first donor node may send the first registration request information to the first donor node by using an RRC message, and the first donor node may send the first registration request feedback information to the at least one IAB MT by using an RRC message.

For example, after the first donor node receives the first registration request information from the at least one IAB MT served by the first donor node, the first donor node sends, to the AMF, the first registration request information respectively corresponding to the at least one IAB MT served by the first donor node. Correspondingly, the AMF receives, from the first donor node, the first registration request information respectively corresponding to the at least one IAB MT. The AMF sends, to the first donor node based on the first registration request information, the first registration request feedback information corresponding to the at least one IAB MT. Correspondingly, the first donor node receives the first registration request feedback information from the AMF, and separately sends the first registration request feedback information to the at least one IAB MT served by the first donor node.

Optionally, the at least one IAB MT served by the first donor node separately sends the first registration request information to the AMF by using a NAS message, where the first registration request information indicates at least one second service function requested for registration by the IAB MT. Correspondingly, the AMF receives the first registration request information from the at least one IAB MT served by the first donor node. The AMF separately sends, to the at least one IAB MT served by the first donor node, the first registration request feedback information by using a NAS message based on the first registration request information respectively corresponding to the at least one IAB MT, where the first registration request feedback information indicates a second service function authorized for registration and/or a second service function not authorized for registration in the at least one second service function requested for registration by the IAB MT. Optionally, the at least one first service function includes the second service function authorized for registration. Optionally, the AMF may send, to the first donor node by using an N2 message, the first registration request feedback information respectively corresponding to the at least one IAB MT served by the first donor node.

Optionally, the first registration request information includes at least one of identification information, service type information, or service status information respectively corresponding to the at least one second service function. The first registration request feedback information includes identification information corresponding to the second service function authorized for registration and/or identification information corresponding to the second service function not authorized for registration.

Optionally, the first registration request feedback information includes reason information for denying authorization corresponding to the second service function not authorized for registration. For example, the first registration request feedback information includes the identification information corresponding to the second service function not authorized for registration and the reason information for denying authorization corresponding to the second service function not authorized for registration. For example, the first registration request feedback information includes the identification information corresponding to the second service function authorized for registration, the identification information corresponding to the second service function not authorized for registration, and the reason information for denying authorization corresponding to the second service function not authorized for registration.

Optionally, before the first donor node/the AMF sends the second service function list information to the terminal device, at least one IAB MT served by the second donor node separately sends second registration request information to the second donor node, where the second registration request information indicates at least one fourth service function requested for registration by an IAB MT. Correspondingly, the second donor node receives the second registration request information from the at least one IAB MT served by the second donor node. The second donor node separately sends second registration request feedback information to the at least one IAB MT served by the second donor node, where the second registration request feedback information indicates a fourth service function authorized for registration and/or a fourth service function not authorized for registration in the at least one fourth service function requested for registration by the IAB MT. Optionally, the at least one third service function includes the fourth service function authorized for registration. The IAB MT in the at least one IAB MT served by the second donor node receives, from the second donor node, the second registration request feedback information corresponding to the IAB MT. Optionally, the IAB MT in the at least one IAB MT served by the second donor node communicates with a remote server by using a PDU session based on the second registration request feedback information, to download the fourth service function authorized for registration.

Optionally, any one of the at least one IAB MT served by the second donor node may send the second registration request information to the second donor node by using an RRC message, and the second donor node may send the second registration request feedback information to the at least one IAB MT by using an RRC message.

For example, after the second donor node receives the second registration request information from the at least one IAB MT served by the second donor node, the second donor node sends, to the AMF, the second registration request information respectively corresponding to the at least one IAB MT served by the second donor node. Correspondingly, the AMF receives, from the second donor node, the second registration request information respectively corresponding to the at least one IAB MT. The AMF sends, to the second donor node based on the second registration request information, the second registration request feedback information corresponding to the at least one IAB MT. Correspondingly, the second donor node receives the second registration request feedback information from the AMF, and separately sends the second registration request feedback information to the at least one IAB MT served by the second donor node.

Optionally, the at least one IAB MT served by the second donor node separately sends the second registration request information to the AMF by using a NAS message, where the second registration request information indicates at least one fourth service function requested for registration by the IAB MT. Correspondingly, the AMF receives the second registration request information from the at least one IAB MT served by the second donor node. The AMF separately sends, to the at least one IAB MT served by the second donor node, the second registration request feedback information by using a NAS message based on the second registration request information respectively corresponding to the at least one IAB MT, where the second registration request feedback information indicates a fourth service function authorized for registration and/or a fourth service function not authorized for registration in the at least one fourth service function requested for registration by the IAB MT. Optionally, the at least one third service function includes the fourth service function authorized for registration. Optionally, the AMF may send, to the second donor node by using an N2 message, the second registration request feedback information respectively corresponding to the at least one IAB MT served by the second donor node.

Optionally, the second registration request information includes at least one of identification information, service type information, or service status information respectively corresponding to the at least one fourth service function. The second registration request feedback information includes identification information corresponding to the fourth service function authorized for registration and/or identification information corresponding to the fourth service function not authorized for registration.

Optionally, the second registration request feedback information includes reason information for denying authorization corresponding to the fourth service function not authorized for registration. For example, the second registration request feedback information includes the identification information corresponding to the fourth service function not authorized for registration and the reason information for denying authorization corresponding to the fourth service function not authorized for registration. For example, the second registration request feedback information includes the identification information corresponding to the fourth service function authorized for registration, the identification information corresponding to the fourth service function not authorized for registration, and the reason information for denying authorization corresponding to the fourth service function not authorized for registration.

For example, a service type indicated by the service type information includes a service type such as AI, sensing, positioning, or computation. For example, status information indicated by the service status information includes stateful and stateless.

Optionally, the at least one IAB MT served by the first donor node separately sends first service configuration update request information to the first donor node. The first service configuration update request information is used to request to update a service function list of the IAB MT. The first service configuration update request information includes at least one of the following: identification information corresponding to a service function requested to be added, identification information corresponding to a service function requested to be deleted, or identification information and service parameter information that correspond to a service function requested to be updated. The first donor node receives the first service configuration update request information from the at least one IAB MT served by the first donor node. The first donor node separately sends, based on the first service configuration update request information of the at least one IAB MT, first service configuration update response information to the at least one IAB MT served by the first donor node. The first service configuration update response information includes at least one of the following: identification information corresponding to a service function authorized for addition, identification information corresponding to a service function authorized for deletion, or identification information corresponding to a service function authorized for update. The IAB MT receives the first service configuration update response information from the first donor node. Optionally, the IAB MT in the at least one IAB MT served by the first donor node communicates with a remote server by using a PDU session based on the first service configuration update response information, to download the service function authorized for addition and/or update the service function authorized for update.

Optionally, the first service configuration update response information may include at least one of the following: identification information corresponding to a service function not authorized for addition, identification information corresponding to a service function not authorized for deletion, or identification information corresponding to a service function not authorized for update. This is not limited in this application.

Based on this optional solution, the IAB MT may update the service function list of the IAB MT by sending the first service configuration update request information, to quickly roll out/update a service function.

Optionally, the at least one IAB MT served by the second donor node separately sends second service configuration update request information to the second donor node. The second service configuration update request information is used to request to update a service function list of the IAB MT. The second service configuration update request information includes at least one of the following: identification information corresponding to a service function requested to be added, identification information corresponding to a service function requested to be deleted, or identification information and service parameter information that correspond to a service function requested to be updated. The second donor node receives the second service configuration update request information from the at least one IAB MT served by the second donor node. The second donor node separately sends, based on the second service configuration update request information of the at least one IAB MT, second service configuration update response information to the at least one IAB MT served by the second donor node. The second service configuration update response information includes at least one of the following: identification information corresponding to a service function authorized for addition, identification information corresponding to a service function authorized for deletion, or identification information corresponding to a service function authorized for update. The IAB MT receives the second service configuration update response information from the second donor node. Optionally, the IAB MT in the at least one IAB MT served by the second donor node communicates with a remote server by using a PDU session based on the second service configuration update response information, to download the service function authorized for addition and/or update the service function authorized for update.

Optionally, the second service configuration update response information may include at least one of the following: identification information corresponding to a service function not authorized for addition, identification information corresponding to a service function not authorized for deletion, or identification information corresponding to a service function not authorized for update. This is not limited in this application.

Based on this optional solution, the IAB MT may update the service function list of the IAB MT by sending the second service configuration update request information, to quickly roll out/update a service function.

1020: The first donor node sends third configuration information to a second IAB DU based on the first information, where the third configuration information indicates a correspondence between a third DRB identifier and a third BAP routing identifier, a second IAB node includes the second IAB DU, the second IAB node is an access IAB node of the terminal device, and at least one IAB node served by the first donor node includes the second IAB node. Correspondingly, the second IAB DU receives the third configuration information from the first donor node.

Optionally, before the first donor node sends the third configuration information to the second IAB DU, the first donor node determines, based on the first information, a second data transmission path between the terminal device and the first donor node, second quality of service requirement information corresponding to the first service function in the topology of the first donor node, and third quality of service requirement information corresponding to the first service function in the topology of the second donor node. The first donor node determines the third configuration information based on the second data transmission path, the second quality of service requirement information, and the third quality of service requirement information.

Optionally, before step 1020, the first donor node determines, based on the first information, that the first IAB MT is allowed to provide the first service function for the terminal device. The following provides example descriptions with reference to step 1021 to step 1024.

Optionally, in 1021, the first donor node sends service request information to the second donor node based on the first information, where the service request information is used to request to provide the first service function for the terminal device; and correspondingly, the second donor node receives the service request information from the first donor node.

1022: The second donor node sends fourth information to the first IAB MT based on the service request information, where the fourth information is used to request the first IAB MT to provide the first service function for the terminal device, and the first IAB MT has the first service function; and correspondingly, the first IAB MT receives the fourth information from the second donor node.

1023: The first IAB MT determines, based on a current load, whether to provide the first service function for the terminal device; if the first IAB MT determines, based on the current load, to provide the first service function for the terminal device, the first IAB MT sends fifth information to the second donor node, where the fifth information indicates that the first IAB MT is allowed to provide the first service function for the terminal device; and correspondingly, the second donor node receives the fifth information from the first IAB MT. For example, when the current load of the first IAB MT is relatively light, the first IAB MT determines to provide the first service function for the terminal device; or when the current load of the first IAB MT is relatively heavy, the first IAB MT determines not to provide the first service function for the terminal device.

For example, the second donor node determines, based on the service request information, that the first IAB MT included in the first IAB node served by the second donor node has the first service function. The second donor node sends the fourth information to the first IAB MT by using an RRC message, where the fourth information is used to request to provide the first service function for the terminal device. The first IAB MT receives the RRC message from the first donor node, and obtains the fourth information based on the RRC message. If the first IAB MT determines, based on the current load, to provide the first service function for the terminal device, the first IAB MT sends the fifth information to the first donor node by using the RRC message, where the fifth information indicates that the first IAB MT is allowed to provide the first service function for the terminal device. The first donor node receives the RRC message from the first IAB MT, and obtains the fifth information based on the RRC message.

1024: The second donor node sends service request response information to the first donor node based on the fifth information, where the service request response information indicates that the first IAB MT is allowed to provide the first service function for the terminal device; and correspondingly, the first donor node receives the service request response information from the second donor node.

Optionally, because the first IAB MT has the first service function, the first donor node may consider by default that the first IAB MT is allowed to provide the first service function for the terminal device, and therefore does not need to send the service request information to the second donor node.

1030: The first donor node sends management request information to the second donor node, where the management request information includes the third quality of service requirement information corresponding to the first service function in the topology of the second donor node, first identification information assigned by the first donor node to the first IAB MT, transport network layer (transport network layer, TNL) information corresponding to a DU included in the first donor node, and information about a third BAP routing identifier. Correspondingly, the second donor node receives the management request information from the first donor node. The management request information sent by the first donor node to the second donor node is used to establish a data channel between the first donor node and the second donor node.

1040: The second donor node sends fourth configuration information to a first IAB DU based on the management request information, where the fourth configuration information indicates a correspondence between a fourth DRB identifier and a fourth BAP routing identifier, and the first IAB node served by the second donor node includes the first IAB MT and the first IAB DU. Correspondingly, the first IAB DU receives the fourth configuration information from the second donor node.

Optionally, before the second donor node sends the fourth configuration information to the first IAB DU, the second donor node determines a third data transmission path between the second donor node and the first IAB MT and the third quality of service requirement information based on the management request information from the first donor node. The second donor node determines the fourth configuration information based on the third data transmission path and the third quality of service requirement information.

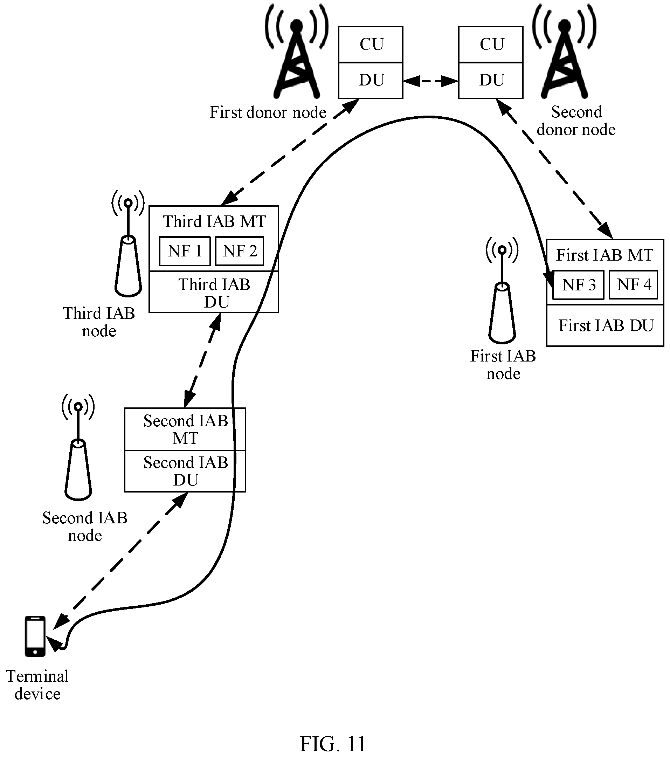

FIG. 11 is a diagram of IAB nodes in topologies of a first donor node and a second donor node. For example, a first service function is an NF 3. A data transmission path between a terminal device and a first IAB MT is the terminal device <-> a second IAB DU <-> a second IAB MT <-> a third IAB DU <-> a third IAB MT <-> a first donor node (a DU of the first donor node) <-> a second donor node (a DU of the second donor node) <-> the first IAB MT. A second IAB

node includes the second IAB DU and the second IAB MT. A third IAB node includes the third IAB DU and the third IAB MT. When the second IAB DU receives a data packet from the terminal device, the second IAB DU replaces a third DRB identifier carried in the data packet with a third BAP routing identifier, and sends the data packet to the second IAB MT. When the first IAB MT receives a data packet from the DU of the second donor node, the first IAB MT sends the data packet to the first IAB DU, and the first IAB DU may determine, based on a fourth BAP routing identifier and the fourth configuration information that are carried in the data packet, that the data packet is sent to the first IAB DU.

1050: The second donor node sends first RRC reconfiguration information to the first IAB MT based on the management request information, where the first RRC reconfiguration information indicates PDCP configuration information and/or SDAP configuration information, PDCP configuration information corresponding to the first IAB MT is the same as PDCP configuration information corresponding to the terminal device, and SDAP configuration information corresponding to the first IAB MT is the same as SDAP configuration information corresponding to the terminal device. Correspondingly, the first IAB MT receives the first RRC reconfiguration information from the second donor node.

1060: The second donor node sends management request response information to the first donor node, where the management request response information includes second identification information assigned by the second donor node to the first IAB MT, transport network layer information corresponding to a DU included in the second donor node, and information about the fourth BAP routing identifier. Correspondingly, the first donor node receives the management request response information from the second donor node.

Optionally, the first donor node establishes a context of the terminal device at the second IAB DU, and does not need to establish an F1-U tunnel for a DRB. Therefore, data does not need to pass through a CU of the first donor node.

1070: The first donor node sends second RRC reconfiguration information to the terminal device based on the management request response information, where the second RRC reconfiguration information indicates PDCP configuration information and/or SDAP configuration information, PDCP configuration information corresponding to the first IAB MT is the same as PDCP configuration information corresponding to the terminal device, and SDAP configuration information corresponding to the first IAB MT is the same as SDAP configuration information corresponding to the terminal device. Correspondingly, the terminal device receives the second RRC reconfiguration information from the first donor node.

Optionally, the management request information further includes third indication information, and the third indication information indicates PDCP configuration information and/or SDAP configuration information corresponding to the first IAB MT; or the management request response information further includes fourth indication information, and the fourth indication information indicates PDCP configuration information and/or SDAP configuration information corresponding to the terminal device.

Optionally, the terminal device communicates with the first IAB MT about the first service function, so that the first IAB MT can provide the first service function for the terminal device.

In the technical solution provided in this embodiment of this application, a service function is integrated on an IAB MT side. When the first donor node receives the first information for requesting to provide the first service function for the terminal device, the first donor node may send the third configuration information to the second IAB DU based on the first information. The second IAB node served by the first donor node includes the second IAB DU. The second IAB node is an access IAB node of the terminal device. The first donor node may send the management request information to the second donor node based on the first information. The first IAB MT included in the first IAB node served by the second donor node has the first service function. The second donor node may send the fourth configuration information to the first IAB DU based on the received management request information. The first IAB node further includes the first IAB DU. The second donor node may further send the RRC reconfiguration information to the first IAB MT. After receiving the management request response information from the second donor node, the first donor node may also send the RRC reconfiguration information to the terminal device to align the PDCP configuration information and/or the SDAP configuration information on the terminal device side and the first IAB MT side, so that the terminal device can communicate with the first IAB MT having the first service function, and the first IAB MT can provide the first service function for the terminal device. In addition, the service function is integrated on the IAB MT side to simplify a network and reduce implementation complexity.

For ease of understanding of embodiments of this application, a communication method provided in embodiments of this application is described below with reference to specific examples.

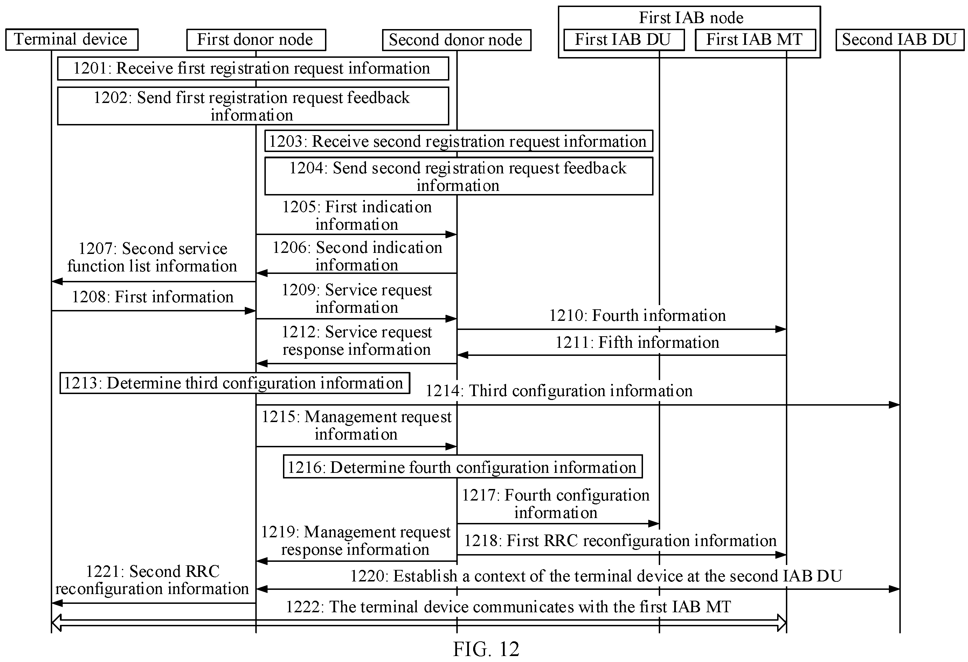

FIG. 12 is a schematic interaction flowchart of another example of a communication method according to an embodiment of this application. A first donor node may be referred to as a first donor gNodeB or a first IAB donor. A second donor node may be referred to as a second donor gNodeB or a second IAB donor. A data transmission path in an IAB network includes a terminal device <-> a second IAB DU <-> a second IAB MT <-> the first donor node <-> the second donor node <-> a first IAB MT.

1201: At least one IAB MT served by the first donor node separately sends first registration request information to the first donor node, where the registration request information indicates at least one second service function requested for registration by an IAB MT; and correspondingly, the first donor node receives the first registration request information from the at least one IAB MT served by the first donor node.

1202: The first donor node separately sends first registration request feedback information to the at least one IAB MT served by the first donor node, where the first registration request feedback information indicates a second service function authorized for registration and/or a second service function not authorized for registration in the at least one second service function requested for registration by the IAB MT. Correspondingly, an IAB MT in the at least one IAB MT served by the first donor node receives, from the first donor node, the first registration request feedback information corresponding to the IAB MT. Optionally, the IAB MT in the at least one IAB MT served by the first donor node communicates with a remote server by using a PDU session based on the first registration request feedback information, to download the second service function authorized for registration.

Optionally, any one of the at least one IAB MT served by the first donor node may send the first registration request information to the first donor node by using an RRC message, and the first donor node may send the first registration request feedback information to the at least one IAB MT by using an RRC message.

For example, after the first donor node receives the first registration request information from the at least one IAB MT served by the first donor node, the first donor node sends, to an AMF, the first registration request information respectively corresponding to the at least one IAB MT served by the first donor node. Correspondingly, the AMF receives, from the first donor node, the first registration request information respectively corresponding to the at least one IAB MT. The AMF sends, to the first donor node based on the first registration request information, the first registration request feedback information corresponding to the at least one IAB MT. Correspondingly, the first donor node receives the first registration request feedback information from the AMF, and separately sends the first registration request feedback information to the at least one IAB MT served by the first donor node.

Optionally, the first registration request information includes at least one of identification information, service type information, or service status information respectively corresponding to the at least one second service function. The first registration request feedback information includes identification information corresponding to the second service function authorized for registration and/or identification information corresponding to the second service function not authorized for registration.

Optionally, the first registration request feedback information includes reason information for denying authorization corresponding to the second service function not authorized for registration. For example, the first registration request feedback information includes the identification information corresponding to the second service function not authorized for registration and the reason information for denying authorization corresponding to the second service function not authorized for registration. For example, the first registration request feedback information includes the identification information corresponding to the second service function authorized for registration, the identification information corresponding to the second service function not authorized for registration, and the reason information for denying authorization corresponding to the second service function not authorized for registration.

1203: At least one IAB MT served by the second donor node separately sends second registration request information to the second donor node, where the second registration request information indicates at least one fourth service function requested for registration by an IAB MT; and correspondingly, the second donor node receives the second registration request information from the at least one IAB MT served by the second donor node.

1204: The second donor node separately sends second registration request feedback information to the at least one IAB MT served by the second donor node, where the second registration request feedback information indicates a fourth service function authorized for registration and/or a fourth service function not authorized for registration in the at least one fourth service function requested for registration by the IAB MT. The IAB MT in the at least one IAB MT served by the second donor node receives, from the second donor node, the second registration request feedback information corresponding to the IAB MT. Optionally, the IAB MT in the at least one IAB MT served by the second donor node communicates with a remote server by using a PDU session based on the second registration request feedback information, to download the fourth service function authorized for registration.

Optionally, any one of the at least one IAB MT served by the second donor node may send the second registration request information to the second donor node by using an RRC message, and the second donor node may send the second registration request feedback information to the at least one IAB MT by using an RRC message.

For example, after the second donor node receives the second registration request information from the at least one IAB MT served by the second donor node, the second donor node sends, to the AMF, the second registration request information respectively corresponding to the at least one IAB MT served by the second donor node. Correspondingly, the AMF receives, from the second donor node, the second registration request information respectively corresponding to the at least one IAB MT. The AMF sends, to the second donor node based on the second registration request information, the second registration request feedback information corresponding to the at least one IAB MT. Correspondingly, the second donor node receives the second registration request feedback information from the AMF, and separately sends the second registration request feedback information to the at least one IAB MT served by the second donor node.

Optionally, the second registration request information includes at least one of identification information, service type information, or service status information respectively corresponding to the at least one fourth service function. The second registration request feedback information includes identification information corresponding to the fourth service function authorized for registration and/or identification information corresponding to the fourth service function not authorized for registration.

Optionally, the second registration request feedback information includes reason information for denying authorization corresponding to the fourth service function not authorized for registration. For example, the second registration request feedback information includes the identification information corresponding to the fourth service function not authorized for registration and the reason information for denying authorization corresponding to the fourth service function not authorized for registration. For example, the second registration request feedback information includes the identification information corresponding to the fourth service function authorized for registration, the identification information corresponding to the fourth service function not authorized for registration, and the reason information for denying authorization corresponding to the fourth service function not authorized for registration.

For example, a service type indicated by the service type information includes a service type such as AI, sensing, positioning, or computation. For example, status information indicated by the service status information includes stateful and stateless.

Optionally, step 1203 may be performed before step 1201, or step 1201 and step 1203 may be simultaneously performed. Similarly, step 1204 may be performed before step 1202, or step 1202 and step 1204 may be simultaneously performed. This is not limited in this application.

1205: The first donor node sends first indication information to the second donor node, where the first indication information indicates at least one first service function supported by an IAB MT included in at least one IAB node served by the first donor node; and correspondingly, the second donor node receives the first indication information from the first donor node.

1206: The second donor node sends second indication information to the first donor node, where the second indication information indicates at least one third service function supported by an IAB MT included in at least one IAB node served by the second donor node; and correspondingly, the first donor node receives the second indication information from the second donor node. For example, the first donor node interacts with the second donor node through an Xn interface. The first donor node may learn, based on the second indication information, of a service function supported in a topology of the second donor node.

Optionally, the at least one first service function includes the second service function authorized for registration, and the at least one third service function includes the fourth service function authorized for registration.

1207: The first donor node sends second service function list information to the terminal device, where the second service function list information indicates the at least one first service function supported by the IAB MT included in the at least one IAB node served by the first donor node and the at least one third service function supported by the IAB MT included in the at least one IAB node served by the second donor node. Correspondingly, the terminal device receives the second service function list information from the first donor node, where the at least one third service function includes the first service function, the at least one IAB node served by the second donor node includes a first IAB node, the first IAB node includes the first IAB MT, and the first IAB MT has the first service function. The terminal device may learn, based on the second service function list information, of service functions that can be provided by the terminal device by using the first donor node.

Optionally, the at least one IAB MT served by the first donor node separately sends first service configuration update request information to the first donor node. The first service configuration update request information is used to request to update a service function list of the IAB MT. The first service configuration update request information includes at least one of the following: identification information corresponding to a service function requested to be added, identification information corresponding to a service function requested to be deleted, or identification information and service parameter information that correspond to a service function requested to be updated. The first donor node receives the first service configuration update request information from the at least one IAB MT served by the first donor node. The first donor node separately sends, based on the first service configuration update request information of the at least one IAB MT, first service configuration update response information to the at least one IAB MT served by the first donor node. The first service configuration update response information includes at least one of the following: identification information corresponding to a service function authorized for addition, identification information corresponding to a service function authorized for deletion, or identification information corresponding to a service function authorized for update. The IAB MT receives the first service configuration update response information from the first donor node. Optionally, the IAB MT communicates with a remote server by using a PDU session based on the first service configuration update response information, to download the service function authorized for addition and/or update the service function authorized for update.

Optionally, the first service configuration update response information may include at least one of the following: identification information corresponding to a service function not authorized for addition, identification information corresponding to a service function not authorized for deletion, or identification information corresponding to a service function not authorized for update. This is not limited in this application.

Optionally, the at least one IAB MT served by the second donor node separately sends second service configuration update request information to the second donor node. The second service configuration update request information is used to request to update a service function list of the IAB MT. The second service configuration update request information includes at least one of the following: identification information corresponding to a service function requested to be added, identification information corresponding to a service function requested to be deleted, or identification information and service parameter information that correspond to a service function requested to be updated. The second donor node receives the second service configuration update request information from the at least one IAB MT served by the second donor node. The second donor node separately sends, based on the second service configuration update request information of the at least one IAB MT, second service configuration update response information to the at least one IAB MT served by the second donor node. The second service configuration update response information includes at least one of the following: identification information corresponding to a service function authorized for addition, identification information corresponding to a service function authorized for deletion, or identification information corresponding to a service function authorized for update. The IAB MT receives the second service configuration update response information from the second donor node. Optionally, the IAB MT communicates with a remote server by using a PDU session based on the second service configuration update response information, to download the service function authorized for addition and/or update the service function authorized for update.

Optionally, the second service configuration update response information may include at least one of the following: identification information corresponding to a service function not authorized for addition, identification information corresponding to a service function not authorized for deletion, or identification information corresponding to a service function not authorized for update. This is not limited in this application.

1208: The terminal device sends first information to the first donor node, where the first information is used to request to provide the first service function for the terminal device; and correspondingly, the first donor node receives the first information from the terminal device.

1209: The first donor node determines, based on the first information, that a first IAB MT included in the first IAB node served by the second donor node has the first service function, and the first donor node sends service request information to the second donor node, where the service request information is used to request to provide the first service function for the terminal device; and correspondingly, the second donor node receives the service request information from the first donor node.

1210: The second donor node sends fourth information to the first IAB MT based on the service request information, where the fourth information is used to request the first IAB MT to provide the first service function for the terminal device, and the first IAB MT has the first service function; and correspondingly, the first IAB MT receives the fourth information from the second donor node.

1211: The first IAB MT determines, based on a current load, whether to provide the first service function for the terminal device; if the first IAB MT determines, based on the current load, to provide the first service function for the terminal device, the first IAB MT sends fifth information to the second donor node, where the fifth information indicates that the first IAB MT is allowed to provide the first service function for the terminal device; and correspondingly, the second donor node receives the fifth information from the first IAB MT. For example, when the current load of the first IAB MT is relatively light, the first IAB MT determines to provide the first service function for the terminal device; or when the current load of the first IAB MT is relatively heavy, the first IAB MT determines not to provide the first service function for the terminal device.

1212: The second donor node sends service request response information to the first donor node based on the fifth information, where the service request response information indicates that the first IAB MT is allowed to provide the first service function for the terminal device; and correspondingly, the first donor node receives the service request response information from the second donor node.

1213: The first donor node determines, based on the service request response information, a second data transmission path between the terminal device and the first donor node, second quality of service requirement information corresponding to the first service function in a topology of the first donor node, and third quality of service requirement information corresponding to the first service function in a topology of the second donor node; the first donor node determines third configuration information based on the second data transmission path, the second quality of service requirement information, and the third quality of service requirement information, where the third configuration information indicates a correspondence between a third DRB identifier and a third BAP routing identifier, a second IAB node includes the second IAB DU, the second IAB node is an access IAB node of the terminal device, and the at least one IAB node served by the first donor node includes the second IAB node.

1214: The first donor node sends the third configuration information to the second IAB DU; and correspondingly, the second IAB DU receives the third configuration information from the first donor node.

1215: The first donor node sends management request information to the second donor node, where the management request information includes the third quality of service requirement information corresponding to the first service function in the topology of the second donor node, first identification information assigned by the first donor node to the first IAB MT, transport network layer information corresponding to a DU included in the first donor node, and information about the third BAP routing identifier. Correspondingly, the second donor node receives the management request information from the first donor node. The management request information sent by the first donor node to the second donor node is used to establish a data channel between the first donor node and the second donor node.

1216: The second donor node determines a third data transmission path between the second donor node and the first IAB MT and the third quality of service requirement information based on the management request information from the first donor node, and the second donor node determines fourth configuration information based on the third data transmission path and the third quality of service requirement information, where the fourth configuration information indicates a correspondence between a fourth DRB identifier and a fourth BAP routing identifier, and the first IAB node served by the second donor node includes the first IAB MT and the first IAB DU.

1217: The second donor node sends the fourth configuration information to the first IAB DU; and correspondingly, the first IAB DU receives the fourth configuration information from the second donor node.

1218: The second donor node sends first RRC reconfiguration information to the first IAB MT based on the management request information from the first donor node, where the first RRC reconfiguration information indicates PDCP configuration information and/or SDAP configuration information corresponding to the first IAB MT, the PDCP configuration information corresponding to the first IAB MT is the same as PDCP configuration information corresponding to the terminal device, and the SDAP configuration information corresponding to the first IAB MT is the same as SDAP configuration information corresponding to the terminal device. Correspondingly, the first IAB MT receives the first RRC reconfiguration information from the second donor node.

1219: The second donor node sends management request response information to the first donor node, where the management request response information includes second identification information assigned by the second donor node to the first IAB MT, transport network layer information corresponding to a DU included in the second donor node, and information about the fourth BAP routing identifier. Correspondingly, the first donor node receives the management request response information from the second donor node.

1220: The first donor node establishes a context of the terminal device at the second IAB DU based on the management request response information from the second donor node, and does not need to establish an F1-U tunnel for a DRB. Therefore, data does not need to pass through a CU of the first donor node.

1221: The first donor node sends second RRC reconfiguration information to the terminal device based on the management request response information from the second donor node, where the second RRC reconfiguration information indicates PDCP configuration information and/or SDAP configuration information corresponding to the terminal device, PDCP configuration information corresponding to the first IAB MT is the same as the PDCP configuration information corresponding to the terminal device, and SDAP configuration information corresponding to the first IAB MT is the same as the SDAP configuration information corresponding to the terminal device. Correspondingly, the terminal device receives the second RRC reconfiguration information from the first donor node.

Optionally, the management request information further includes third indication information, and the third indication information indicates PDCP configuration information and/or SDAP configuration information corresponding to the first IAB MT; or the management request response information further includes fourth indication information, and the fourth indication information indicates PDCP configuration information and/or SDAP configuration information corresponding to the terminal device.

1222: The terminal device communicates with the first IAB MT, so that the first IAB MT can provide the first service function for the terminal device.

The foregoing describes the communication method provided in embodiments of this application. The following describes an execution body for performing the foregoing communication method.

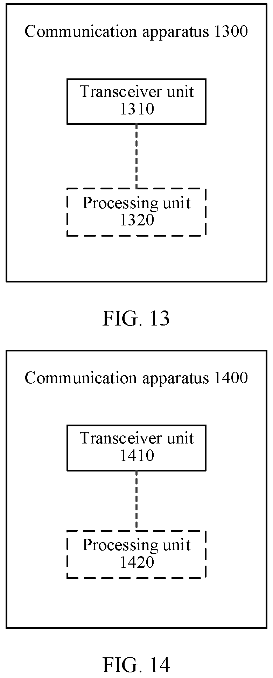

FIG. 13 is a block diagram of a communication apparatus 1300 according to an embodiment of this application. The apparatus may be used or deployed in the first donor node in the method embodiment in FIG. 7 or FIG. 9. The communication apparatus 1300 includes:
a transceiver unit 1310, configured to receive first information, where the first information is used to request to provide a first service function for a terminal device.

The transceiver unit 1310 is further configured to send first configuration information to a first IAB DU based on the first information, where the first configuration information indicates a correspondence between a first DRB identifier and a first BAP routing identifier, a first IAB node includes the first IAB DU and a first IAB MT, and the first IAB MT has the first service function.

The transceiver unit 1310 is further configured to send second configuration information to a second IAB DU based on the first information, where the second configuration information indicates a correspondence between a second DRB identifier and a second BAP routing identifier, a second IAB node includes the second IAB DU, and the second IAB node is an access IAB node of the terminal device.

The transceiver unit 1310 is further configured to separately send first radio resource control RRC reconfiguration information to the first IAB MT and the terminal device based on the first information, where the first RRC reconfiguration information indicates PDCP configuration information and/or SDAP configuration information.

Optionally, the communication apparatus 1300 further includes a processing unit 1320, configured to determine, based on the first information, a first data transmission path between the terminal device and the first IAB MT and first quality of service requirement information corresponding to the first service function in a topology of the communication apparatus.

The processing unit 1320 is further configured to determine the first configuration information and the second configuration information based on the first data transmission path and the first quality of service requirement information.

Optionally, the transceiver unit 1310 is further configured to: send second information to the first IAB MT based on the first information, where the second information is used to request to provide the first service function for the terminal device; and receive third information from the first IAB MT, where the third information indicates that the first IAB MT is allowed to provide the first service function for the terminal device.

Optionally, the transceiver unit 1310 is specifically configured to receive the first information from the terminal device.

Optionally, the transceiver unit 1310 is further configured to send first service function list information to the terminal device, where the first service function list information indicates at least one first service function supported by an IAB MT included in at least one IAB node served by the communication apparatus, the at least one first service function includes the first service function, and the at least one IAB node includes the first IAB node.

Optionally, the transceiver unit 1310 is specifically configured to receive the first information from an access and mobility management function AMF.

Optionally, the transceiver unit 1310 is further configured to: receive registration request information from at least one IAB MT, where the registration request information indicates at least one second service function requested for registration by the IAB MT, and the at least one IAB MT includes the first IAB MT; and separately send registration request feedback information to the at least one IAB MT, where the registration request feedback information indicates a second service function authorized for registration and/or a second service function not authorized for registration in the at least one second service function requested for registration by the IAB MT, and the at least one first service function includes the second service function authorized for registration.

Optionally, the transceiver unit 1310 is further configured to: send the registration request information to the AMF; and receive the registration request feedback information from the AMF.

Optionally, the registration request information includes at least one of identification information, service type information, or service status information respectively corresponding to the at least one second service function. The registration request feedback information includes identification information corresponding to the second service function authorized for registration and/or identification information corresponding to the second service function not authorized for registration.

Optionally, the registration request feedback information includes reason information for denying authorization corresponding to the second service function not authorized for registration.

FIG. 14 is a block diagram of another communication apparatus 1400 according to an embodiment of this application. The apparatus may be used or deployed in the first donor node in the method embodiment in FIG. 10 or FIG. 12. The communication apparatus 1400 includes:
a transceiver unit 1410, configured to receive first information, where the first information is used to request to provide a first service function for a terminal device.

The transceiver unit 1410 is further configured to send third configuration information to a second IAB DU based on the first information, where the third configuration information indicates a correspondence between a third DRB identifier and a third BAP routing identifier, a second IAB node includes the second IAB DU, the second IAB node is an access IAB node of the terminal device, and at least one IAB node served by the communication apparatus includes the second IAB node.

The transceiver unit 1410 is further configured to send management request information to a second donor node, where the management request information includes third quality of service requirement information corresponding to the first service function in a topology of the second donor node, first identification information assigned by the communication apparatus to a first IAB MT, transport network layer information corresponding to a DU included in the communication apparatus, and information about the third BAP routing identifier, a first IAB node served by the second donor node includes the first IAB MT, and the first IAB MT has the first service function.

The transceiver unit 1410 is further configured to receive management request response information from the second donor node, where the management request response information includes second identification information assigned by the second donor node to the first IAB MT, transport network layer information corresponding to a DU included in the second donor node, and information about a fourth BAP routing identifier corresponding to a first IAB DU, and the first IAB node further includes the first IAB DU.

The transceiver unit 1410 is further configured to send second RRC reconfiguration information to the terminal device based on the management request response information, where the second RRC reconfiguration information indicates PDCP configuration information and/or SDAP configuration information, PDCP configuration information corresponding to the terminal device is the same as PDCP configuration information corresponding to the first IAB MT, and SDAP configuration information corresponding to the terminal device is the same as SDAP configuration information corresponding to the first IAB MT.

Optionally, the communication apparatus 1400 further includes a processing unit 1420, configured to determine, based on the first information, a second data transmission path between the terminal device and the communication apparatus and second quality of service requirement information and third quality of service requirement information that correspond to the first service function in a topology of the communication apparatus.

The processing unit 1420 is further configured to determine the third configuration information based on the second data transmission path, the second quality of service requirement information, and the third quality of service requirement information.

Optionally, the transceiver unit 1410 is further configured to: send service request information to the second donor node based on the first information, where the service request information is used to request to provide the first service function for the terminal device; and receive service request response information from the second donor node, where the service request response information indicates that the first IAB MT is allowed to provide the first service function for the terminal device.

Optionally, the transceiver unit 1410 is further configured to: send first indication information to the second donor node, where the first indication information indicates at least one first service function supported by an IAB MT included in the at least one IAB node served by the communication apparatus; and receive second indication information from the second donor node, where the second indication information indicates at least one third service function supported by an IAB MT included in at least one IAB node served by the second donor node, the at least one third service function includes the first service function, and the at least one IAB node served by the second donor node includes the first IAB node.

Optionally, the transceiver unit 1410 is specifically configured to receive the first information from the terminal device.

Optionally, the transceiver unit 1410 is further configured to send second service function list information to the terminal device, where the second service function list information indicates the at least one first service function supported by the IAB MT included in the at least one IAB node served by the communication apparatus and the at least one third service function supported by the IAB MT included in the at least one IAB node served by the second donor node.

Optionally, the transceiver unit 1410 is specifically configured to receive the first information from an AMF.

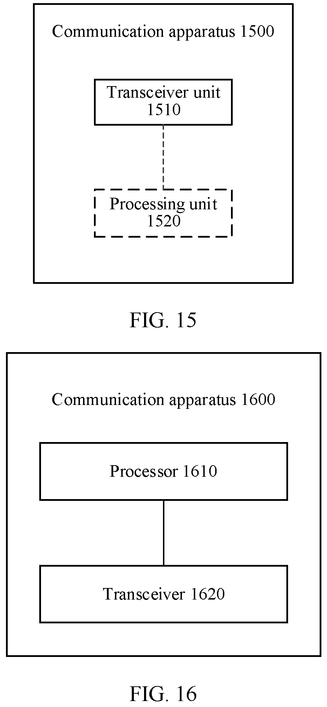

FIG. 15 is a block diagram of another communication apparatus 1500 according to an embodiment of this application. The apparatus may be used or deployed in the second donor node in the method embodiment in FIG. 10 or FIG. 12. The communication apparatus 1500 includes:
a transceiver unit 1510, configured to receive management request information from a first donor node, where the management request information includes third quality of service requirement information corresponding to a first service function in a topology of the communication apparatus, first identification information assigned by the first donor node to a first IAB MT, transport network layer information corresponding to a DU included in the first donor node, and information about a third BAP routing identifier corresponding to a second IAB DU served by the first donor node, a first IAB node served by the communication apparatus includes the first IAB MT, the first IAB MT has the first service function, a second IAB node served by the first donor node includes the second IAB DU, and the second IAB node is an access IAB node of a terminal device.

The transceiver unit 1510 is further configured to send fourth configuration information to a first IAB DU based on the management request information, where the fourth configuration information indicates a correspondence between a fourth DRB identifier and a fourth BAP routing identifier, and the first IAB node further includes the first IAB DU.

The transceiver unit 1510 is further configured to send first RRC reconfiguration information to the first IAB MT based on the management request information, where the first RRC reconfiguration information indicates PDCP configuration information and/or SDAP configuration information, PDCP configuration information corresponding to the first IAB MT is the same as PDCP configuration information corresponding to the terminal device, and SDAP configuration information corresponding to the first IAB MT is the same as SDAP configuration information corresponding to the terminal device.

The transceiver unit 1510 is further configured to send management request response information to the first donor node, where the management request response information includes second identification information assigned by the communication apparatus to the first IAB MT, transport network layer information corresponding to a DU included in the communication apparatus, and information about the fourth BAP routing identifier.

Optionally, the communication apparatus 1500 further includes a processing unit 1520, configured to determine a third data transmission path between the communication apparatus and the first IAB MT and the third quality of service requirement information based on the management request information.

The processing unit 1520 is further configured to determine the fourth configuration information based on the third data transmission path and the third quality of service requirement information.

Optionally, the transceiver unit 1510 is further configured to: receive service request information from the first donor node, where the service request information is used to request to provide the first service function for the terminal device; send fourth information to the first IAB MT based on the service request information, where the fourth information is used to request the first IAB MT to provide the first service function for the terminal device; receive fifth information from the first IAB MT, where the fifth information indicates that the first IAB MT is allowed to provide the first service function for the terminal device; and send service request response information to the first donor node based on the fifth information, where the service request response information indicates that the first IAB MT is allowed to provide the first service function for the terminal device.

Optionally, the transceiver unit 1510 is further configured to: receive first indication information from the communication apparatus, where the first indication information indicates at least one first service function supported by an IAB MT included in at least one IAB node served by the first donor node; and receive second indication information sent to the communication apparatus, where the second indication information indicates at least one third service function supported by an IAB MT included in at least one IAB node served by the communication apparatus, the at least one third service function includes the first service function, and at least one IAB node served by the communication apparatus includes the first IAB node.

FIG. 16 is a block diagram of another communication apparatus 1600 according to an embodiment of this application. The communication apparatus 1600 includes:
a processor 1610 and a transceiver 1620, where the transceiver 1620 is configured to: receive computer code or instructions, and transmit the computer code or instructions to the processor 1610, and the processor 1610 runs the computer code or instructions to implement the methods in embodiments of this application. The communication apparatus may be the first donor node or the second donor node in embodiments of this application.

The processor 1610 may be an integrated circuit chip, and has a signal processing capability. During implementation, the steps in the foregoing method embodiments may be completed by using a hardware integrated logical circuit in the processor or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The methods, steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in a memory. A processor reads information in the memory and completes the steps in the foregoing methods in combination with hardware of the processor.

An embodiment of this application provides a communication system, including: the first donor node, another communication device that communicates with the first donor node, a second donor node, and another communication device that communicates with the second donor node in the communication methods provided in embodiments of this application.

An embodiment of this application provides another communication system, including: the first donor node, the terminal device, the first IAB node, and the second IAB node in the communication methods provided in embodiments of this application.

An embodiment of this application provides another communication system, including: the first donor node, the second donor node, the terminal device, the first IAB node, and the second IAB node in the communication methods provided in embodiments of this application.

An embodiment of this application further provides a computer-readable storage medium. The computer-readable storage medium stores a computer program used to implement the methods in the foregoing method embodiments. When the computer program is run on a computer or a processor, the computer can implement the methods in the foregoing method embodiments.

An embodiment of this application further provides a computer program product. The computer program product includes computer program code. When the computer program code runs on a computer, the method in the foregoing method embodiment is performed.

An embodiment of this application further provides a chip, including a processor. The processor is connected to a memory. The memory is configured to store a computer program. The processor is configured to execute the computer program stored in the memory, so that the chip performs the method in the foregoing method embodiment.

It should be understood that in embodiments of this application, numbers "first", "second", and the like are merely for distinguishing between different objects, for example, to distinguish between different donor nodes or different information, and do not constitute a limitation on the scope of embodiments of this application. Embodiments of this application are not limited thereto.

In addition, the term "and/or" in this application describes only an association relationship between associated objects, and indicates that three relationships may exist. For example, A and/or B may indicate the following three cases: Only A exists; both A and B exist; or only B exists. In addition, the character "/" in this specification generally represents an "or" relationship between associated objects. In this application, the term "at least one" may represent "one" and "two or more". For example, at least one of A, B, and C may represent the following seven cases: Only A exists, only B exists, only C exists, both A and B exist, both A and C exist, and both C and B exist, and A, B, C all exist.

A person of ordinary skill in the art may be aware that the units and algorithm steps of each example described with reference to embodiments disclosed herein can be implemented in electronic hardware or a combination of computer software and electronic hardware. Whether the functions are performed by hardware or software depends on particular applications and design constraints of the technical solutions. A person skilled in the art may use different methods to implement the described functions for each specific application. However, it should not be considered that such implementation goes beyond the scope of this application.

A person skilled in the art can clearly understand that for convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first donor node, first information, wherein the first information is used to request to provide a first service function for a terminal device;
sending, by the first donor node, first configuration information to a first integrated access and backhaul IAB distributed unit DU based on the first information, wherein the first configuration information indicates a correspondence between a first data radio bearer DRB identifier and a first backhaul adaptation protocol BAP routing identifier, a first IAB node comprises the first IAB DU and a first IAB mobile termination MT, and the first IAB MT has the first service function;
sending, by the first donor node, second configuration information to a second IAB DU based on the first information, wherein the second configuration information indicates a correspondence between a second DRB identifier and a second BAP routing identifier, a second IAB node comprises the second IAB DU, and the second IAB node is an access IAB node of the terminal device; and
separately sending, by the first donor node, first radio resource control RRC reconfiguration information to the first IAB MT and the terminal device based on the first information, wherein the first RRC reconfiguration information indicates packet data convergence protocol PDCP configuration information and/or service data adaptation protocol SDAP configuration information.

2. The method according to claim 1, further comprising:
determining, by the first donor node based on the first information, a first data transmission path between the terminal device and the first IAB MT and first quality of service requirement information corresponding to the first service function in a topology of the first donor node; and
determining, by the first donor node, the first configuration information and the second configuration information based on the first data transmission path and the first quality of service requirement information.

3. The method according to claim 1 or 2, further comprising:
sending, by the first donor node, second information to the first IAB MT based on the first information, wherein the second information is used to request to provide the first service function for the terminal device; and
receiving, by the first donor node, third information from the first IAB MT, wherein the third information indicates that the first IAB MT is allowed to provide the first service function for the terminal device.

4. The method according to any one of claims 1 to 3, wherein receiving, by the first donor node, the first information comprises:
receiving, by the first donor node, the first information from the terminal device.

5. The method according to claim 4, further comprising:
sending, by the first donor node, first service function list information to the terminal device, wherein the first service function list information indicates at least one first service function supported by an IAB MT comprised in at least one IAB node served by the first donor node, the at least one first service function comprises the first service function, and the at least one IAB node comprises the first IAB node.

6. The method according to any one of claims 1 to 3, wherein receiving, by the first donor node, the first information comprises:
receiving, by the first donor node, the first information from an access and mobility management function AMF.

7. The method according to any one of claims 1 to 6, further comprising:
receiving, by the first donor node, registration request information from at least one IAB MT, wherein the registration request information indicates at least one second service function requested for registration by the IAB MT, and the at least one IAB MT comprises the first IAB MT; and
separately sending, by the first donor node, registration request feedback information to the at least one IAB MT, wherein the registration request feedback information indicates a second service function authorized for registration and/or a second service function not authorized for registration in the at least one second service function requested for registration by the IAB MT, and the at least one first service function comprises the second service function authorized for registration.

8. The method according to claim 7, further comprising:
sending, by the first donor node, the registration request information to the AMF; and
receiving, by the first donor node, the registration request feedback information from the AMF.

9. The method according to claim 7 or 8, wherein
the registration request information comprises at least one of identification information, service type information, or service status information respectively corresponding to the at least one second service function; and
the registration request feedback information comprises identification information corresponding to the second service function authorized for registration and/or identification information corresponding to the second service function not authorized for registration.

10. The method according to any one of claims 7 to 9, wherein
the registration request feedback information comprises reason information for denying authorization corresponding to the second service function not authorized for registration.

11. A communication method, comprising:
receiving, by a first donor node, first information, wherein the first information is used to request to provide a first service function for a terminal device;
sending, by the first donor node, third configuration information to a second IAB DU based on the first information, wherein the third configuration information indicates a correspondence between a third DRB identifier and a third BAP routing identifier, a second IAB node comprises the second IAB DU, the second IAB node is an access IAB node of the terminal device, and at least one IAB node served by the first donor node comprises the second IAB node;
sending, by the first donor node, management request information to a second donor node, wherein the management request information comprises third quality of service requirement information corresponding to the first service function in a topology of the second donor node, first identification information assigned by the first donor node to a first IAB MT, transport network layer information corresponding to a DU comprised in the first donor node, and information about the third BAP routing identifier, a first IAB node served by the second donor node comprises the first IAB MT, and the first IAB MT has the first service function;
receiving, by the first donor node, management request response information from the second donor node, wherein the management request response information comprises second identification information assigned by the second donor node to the first IAB MT, transport network layer information corresponding to a DU comprised in the second donor node, and information about a fourth BAP routing identifier corresponding to a first IAB DU, and the first IAB node further comprises the first IAB DU; and
sending, by the first donor node, second RRC reconfiguration information to the terminal device based on the management request response information, wherein the second RRC reconfiguration information indicates PDCP configuration information and/or SDAP configuration information, PDCP configuration information corresponding to the terminal device is the same as PDCP configuration information corresponding to the first IAB MT, and SDAP configuration information corresponding to the terminal device is the same as SDAP configuration information corresponding to the first IAB MT.

12. The method according to claim 11, further comprising:
determining, by the first donor node based on the first information, a second data transmission path between the terminal device and the first donor node and second quality of service requirement information and third quality of service requirement information that correspond to the first service function in a topology of the first donor node; and
determining, by the first donor node, the third configuration information based on the second data transmission path, the second quality of service requirement information, and the third quality of service requirement information.

13. The method according to claim 11 or 12, further comprising:
sending, by the first donor node, service request information to the second donor node based on the first information, wherein the service request information is used to request to provide the first service function for the terminal device; and
receiving, by the first donor node, service request response information from the second donor node, wherein the service request response information indicates that the first IAB MT is allowed to provide the first service function for the terminal device.

14. The method according to any one of claims 11 to 13, further comprising:
sending, by the first donor node, first indication information to the second donor node, wherein the first indication information indicates at least one first service function supported by an IAB MT comprised in the at least one IAB node served by the first donor node; and
receiving, by the first donor node, second indication information from the second donor node, wherein the second indication information indicates at least one third service function supported by an IAB MT comprised in at least one IAB node served by the second donor node, the at least one third service function comprises the first service function, and the at least one IAB node served by the second donor node comprises the first IAB node.

15. The method according to any one of claims 11 to 14, wherein receiving, by the first donor node, the first information comprises:
receiving, by the first donor node, the first information from the terminal device.

16. The method according to claim 15, further comprising:
sending, by the first donor node, second service function list information to the terminal device, wherein the second service function list information indicates the at least one first service function supported by the IAB MT comprised in the at least one IAB node served by the first donor node and the at least one third service function supported by the IAB MT comprised in the at least one IAB node served by the second donor node.

17. The method according to any one of claims 11 to 14, wherein receiving, by the first donor node, the first information comprises:
receiving, by the first donor node, the first information from an AMF.

18. A communication method, comprising:
receiving, by a second donor node, management request information from a first donor node, wherein the management request information comprises third quality of service requirement information corresponding to a first service function in a topology of the second donor node, first identification information assigned by the first donor node to a first IAB MT, transport network layer information corresponding to a DU comprised in the first donor node, and information about a third BAP routing identifier corresponding to a second IAB DU served by the first donor node, a first IAB node served by the second donor node comprises the first IAB MT, the first IAB MT has the first service function, a second IAB node served by the first donor node comprises the second IAB DU, and the second IAB node is an access IAB node of a terminal device;
sending, by the second donor node, fourth configuration information to a first IAB DU based on the management request information, wherein the fourth configuration information indicates a correspondence between a fourth DRB identifier and a fourth BAP routing identifier, and the first IAB node further comprises the first IAB DU;
sending, by the second donor node, first RRC reconfiguration information to the first IAB MT based on the management request information, wherein the first RRC reconfiguration information indicates PDCP configuration information and/or SDAP configuration information, PDCP configuration information corresponding to the first IAB MT is the same as PDCP configuration information corresponding to the terminal device, and SDAP configuration information corresponding to the first IAB MT is the same as SDAP configuration information corresponding to the terminal device; and
sending, by the second donor node, management request response information to the first donor node, wherein the management request response information comprises second identification information assigned by the second donor node to the first IAB MT, transport network layer information corresponding to a DU comprised in the second donor node, and information about the fourth BAP routing identifier.

19. The method according to claim 18, further comprising:
determining, by the second donor node, a third data transmission path between the second donor node and the first IAB MT and the third quality of service requirement information based on the management request information; and
determining, by the second donor node, the fourth configuration information based on the third data transmission path and the third quality of service requirement information.

20. The method according to claim 18 or 19, further comprising:
receiving, by the second donor node, service request information from the first donor node, wherein the service request information is used to request to provide the first service function for the terminal device;
sending, by the second donor node, fourth information to the first IAB MT based on the service request information, wherein the fourth information is used to request the first IAB MT to provide the first service function for the terminal device;
receiving, by the second donor node, fifth information from the first IAB MT, wherein the fifth information indicates that the first IAB MT is allowed to provide the first service function for the terminal device; and
sending, by the second donor node, service request response information to the first donor node based on the fifth information, wherein the service request response information indicates that the first IAB MT is allowed to provide the first service function for the terminal device.

21. The method according to any one of claims 18 to 20, further comprising:
receiving, by the second donor node, first indication information from the second donor node, wherein the first indication information indicates at least one first service function supported by an IAB MT comprised in at least one IAB node served by the first donor node; and
receiving, by the second donor node, second indication information sent to the second donor node, wherein the second indication information indicates at least one third service function supported by an IAB MT comprised in at least one IAB node served by the second donor node, the at least one third service function comprises the first service function, and at least one IAB node served by the second donor node comprises the first IAB node.

22. A communication apparatus, comprising a unit configured to perform the method according to any one of claims 1 to 21.

23. A communication apparatus, comprising a processor and a transceiver, wherein the transceiver is configured to receive computer code or instructions and transmit the computer code or instructions to the processor, and the processor runs the computer code or instructions to perform the method according to any one of claims 1 to 21.

24. A communication system, comprising a first donor node and a second donor node, wherein the first donor node is configured to implement the method according to any one of claims 11 to 17, and the second donor node is configured to implement the method according to any one of claims 18 to 21.

25. A computer-readable storage medium, wherein
the computer-readable medium stores a computer program; and
when the computer program is run on a computer or a processor, the method according to any one of claims 1 to 21 is performed.

26. A computer program product, comprising a computer program, wherein when the computer program is executed, the method according to any one of claims 1 to 21 is implemented.
